(19) Europäisches Patentamt / European Patent Office / Office européen des brevets

(11) **EP 3 333 603 B1**

(12) **EUROPEAN PATENT SPECIFICATION**


(45) Date of publication and mention of the grant of the patent:
**04.12.2019 Bulletin 2019/49**

(21) Application number: **16832709.6**

(22) Date of filing: **12.07.2016**

(51) Int Cl.:
***G02B 5/32*** (2006.01) ***G03H 1/02*** (2006.01)
***G03H 1/04*** (2006.01) ***G02B 27/01*** (2006.01)
***G02B 27/02*** (2006.01) ***G11B 7/24044*** (2013.01)

(86) International application number:
**PCT/JP2016/070559**

(87) International publication number:
**WO 2017/022430 (09.02.2017 Gazette 2017/06)**


(54) **HOLOGRAPHIC OPTICAL ELEMENT AND PRODUCTION METHOD THEREFOR**

HOLOGRAPHISCHES OPTISCHES ELEMENT UND HERSTELLUNGSVERFAHREN DAFÜR

ÉLÉMENT OPTIQUE HOLOGRAPHIQUE ET SON PROCÉDÉ DE FABRICATION


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.08.2015 JP 2015155858**

(43) Date of publication of application:
**13.06.2018 Bulletin 2018/24**



(73) Proprietor: **Konica Minolta, Inc.**
**Tokyo 100-7015 (JP)**

(72) Inventors:
- **HIRAOKA, Saburou**
  **Tokyo 100-7015 (JP)**
- **ONAKA, Kenichi**
  **Tokyo 100-7015 (JP)**
- **WATANABE, Daisuke**
  **Tokyo 100-7015 (JP)**
- **KUBO, Yuya**
  **Tokyo 100-7015 (JP)**
- **TAMURA, Kishio**
  **Tokyo 100-7015 (JP)**

(74) Representative: **Henkel & Partner mbB**
**Patentanwaltskanzlei, Rechtsanwaltskanzlei**
**Maximiliansplatz 21**
**80333 München (DE)**



(56) References cited:
**JP-A- H11 161 142** **JP-A- 2014 044 242**
**JP-B2- 4 514 934** **JP-B2- 4 568 245**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).


EP 3 333 603 B1

## Description

### TECHNICAL FIELD

The present invention relates to a holographic optical element and a method for producing the same.

### BACKGROUND ART

A holographic optical element having a volume hologram recording layer functions as an optical combiner and is applied to an optical lens, a display element and the like, and its demand is increasing. In particular, the holographic optical element as a display element of a head mount display or a head up display has high transparency of the volume hologram recording layer and thus can be used as a see-through type display element (for example, JP 2014-215410 A).

Along with the increasing demand for the above display elements and the diversification of applications, the performance requirements for holographic optical elements have increased and quality items have diversified. In order to obtain a high quality image element, it is necessary to increase the selectivity and the diffraction efficiency of the reflected light which are the basic characteristics of the hologram layer, and also maintain the quality of the hologram layer over a long term.

JPH 06-301322 A (corresponding to US 5,858,614 A the same applies hereinafter) discloses a photosensitive composition excellent in refractive index modulation and a method for producing a volume hologram recording layer using the photosensitive composition. More specifically, according to JPH 06-301322 A, a volume hologram recording layer is prepared by subjecting a photosensitive layer obtained by applying and drying a photosensitive composition containing a polymerizable monomer sandwiched between a pair of transparent supports to face-to-face exposure with a coherent light source (interference exposure), causing a polymerization reaction in accordance with the interference wave in the photosensitive layer, and forming a diffraction grating composed of regions of high refractive index and low refractive index.

In order to form such a volume hologram recording layer, compositions (photosensitive compositions for volume type hologram recording) used for forming a photosensitive layer, which is formed in a preliminary stage thereof, have been investigated variously (for example, JP 2014-44242 A (corresponding to WO 2014/030712 A, the same applies hereinafter)). JP 2014-44242 A proposes a technique in which a compound containing two or more thiol groups is added to the composition for forming a photosensitive layer, in addition to the photopolymerizable monomer or the like.

### SUMMARY OF INVENTION

As described above, as the demand for a holographic optical element has increased, the demand for its quality is also increasing. Among others, in order to improve the image quality and obtain a high-quality display element, a technique capable of enhancing the diffraction efficiency, which is the basic characteristic of the volume hologram recording layer, has been required. Also, the holographic optical element is required to maintain its quality for a long period regardless of the variation in use environment.

Accordingly, it is an object of the present invention to provide a means for improving the diffraction efficiency of a holographic optical element having a volume hologram recording layer. Also, another object of the present invention is to provide a means for improving the durability of the holographic optical element.

The present inventors have conducted intensive study. As a result, the present inventors have found that the above problem can be solved by a holographic optical element containing a thiol compound in an adjacent layer provided in contact with a volume hologram recording layer, and have completed the present invention.

More specifically, the above object is achieved by a holographic optical element having a volume hologram recording layer containing a photopolymer, and at least one adjacent layer which is in contact with the volume hologram recording layer and contains a resin and a thiol compound.

In addition, the above object is achieved by a method for producing a holographic optical element including: forming a photosensitive layer comprising a polymerizable monomer so that the photosensitive layer is in contact with an adjacent layer comprising a resin and a thiol compound, and then subjecting the photosensitive layer to holographic exposure to form a volume hologram recording layer.

### BRIEF DESCRIPTION OF DRAWINGS

Fig. 1 is a schematic cross-sectional view showing a typical configuration of a holographic optical element. In Fig. 1, reference numeral 10 denotes a holographic optical element, 11 denotes a volume hologram recording layer,

and 12 denotes an adjacent layer.

Fig. 2 is a schematic diagram showing an example of an apparatus for producing an adjacent layer. In Fig. 2, reference numeral 1 denotes a hopper, 2 denotes an extruder, 3 denotes a heating zone, 4 denotes a T die, 5 denotes a cooling drum, and 6 denotes a molten single layer sheet (resin film).

Fig. 3 is a schematic view showing another example of an apparatus for producing an adjacent layer. In Fig. 3, reference numeral 3' denotes a heating zone, 4' denotes a T die, 5' denotes a cooling drum, 7 denotes a pocket for the first layer, 8 denotes a pocket for the second layer, and 9 denotes a molten bilayer sheet (resin film).

Fig. 4 is a schematic cross-sectional view showing an example of a sample to be subjected to holographic exposure. In Fig. 4, reference numeral 11 denotes a volume hologram recording layer, 12 denotes an adjacent layer, 103a and 103b denote silicone adhesives, and 104a and 104b denote glass prism substrates.

Fig. 5 is a schematic view showing an example of an exposure apparatus used for holographic exposure. In Fig. 5, reference numeral 201 denotes a laser light source, 202a and 202b denote beam steerers, 203 denotes a shutter, 204 denotes a beam expander, 205 denotes a beam splitter, 206, 207, 208 and 209 denote mirrors, 211 and 212 denote spatial filters, and 213 denotes a manufacturing optical system.

## DESCRIPTION OF EMBODIMENTS

Hereinafter, a holographic optical element which is an embodiment of the present invention will be described.

In the following description, a layer containing a polymerizable monomer before holographic exposure (interference exposure) is referred to as a photosensitive layer, and a layer in which a volume hologram is recorded by subjecting the photosensitive layer to holographic exposure is referred to as a volume hologram recording layer.

The holographic optical element of the present embodiment has a volume hologram recording layer containing a photopolymer, and at least one adjacent layer which is in contact with the volume hologram recording layer and contains a resin and a thiol compound. The holographic optical element of the present embodiment having such a configuration is excellent in diffraction efficiency.

Although the detail reason why the above-mentioned effect can be obtained by the holographic optical element of the present embodiment is unknown, the following mechanism is conceivable.

It is considered that a diffraction grating having a high refractive index region and a low refractive index region is formed in the volume hologram recording layer because the following phenomena occur in the photosensitive layer. That is, when holographic exposure is performed and polymerization of the polymerizable monomer in the photosensitive layer is promoted in the exposed part, diffusion movement of the polymerizable monomer occurs so as to minimize the interface between the polymerizable monomer and other components, and also the polymerization reaction further proceeds. As a result, in the photosensitive layer, the photopolymer region formed by the polymerization reaction and the other component region are formed as the same pattern as the interference wave irradiated by holographic exposure. Then, there is a difference in the refractive index between the photopolymer region and the other component region, a high refractive index region and a low refractive index region corresponding to the interference wave are formed, and a diffraction grating (hologram) is formed in the volume hologram recording layer.

As described above, during the preparation of the volume hologram recording layer, the movement of substances actively occurs in the photosensitive layer. Here, for the improvement of the diffraction efficiency of the holographic optical element, the formation of a diffraction grating near the interface between the volume hologram recording layer and the adjacent layer is also presumed to be a major factor.

In the holographic optical element of the present embodiment, it is presumed that the thiol compound contained in the adjacent layer functions like a so-called radical chain transfer agent. As described above, when a thiol compound is contained in the adjacent layer, the frequency of chain transfer of radical polymerization near the interface with the adjacent layer is increased in the volume hologram recording layer, and the polymerization of the polymerizable monomer is promoted. In other words, the polymerization of the polymerizable monomer is easy to proceed toward the interface with the adjacent layer, and the formation of diffraction grating is promoted. As a result, since the diffraction grating formation at the interface of the adjacent layer is performed sufficiently (surely), high diffraction efficiency can be achieved.

On the other hand, JP 2014-44242 A proposes a technique relating to a volume hologram recording body mainly used for security purposes, and discloses a composition containing a thiol compound as a composition for forming a photosensitive layer of the recording body. As described above, since the thiol compound is uniformly dispersed in the photosensitive layer which is formed by the composition containing the thiol compound, polymerization of the present polymerizable monomer may proceed in all directions within the exposed range. In addition, JP 2014-44242 A does not describe that a thiol compound is contained in the substrate side. Therefore, as described in JP 2014-44242 A, the form in which a thiol compound is contained only in the photosensitive layer is less likely to obtain the effect of promoting polymerization in the vicinity of the interface with the adjacent layer, as compared with the present embodiment. Therefore, even if the technique of JP 2014-44242 A is adopted for a holographic optical element used for optical element applications, it is difficult to form a diffraction grating up to the vicinity of the interface with the adjacent layer, so the diffraction

efficiency is not sufficient, and it is presumed that there is still room for improvement from the viewpoint of improving image quality.

Furthermore, the present inventors have found that the holographic optical element according to the present embodiment is also excellent in durability in the process of examining the improvement of the diffraction efficiency as described above. Although there are various causes for deterioration of the durability of the holographic optical elements, one of the causes is diffusion movement of the polymerizable monomer or polymer (photopolymer) in the photosensitive layer. Such a diffusion movement phenomenon lowers the adhesion of the interface between the adjacent layer and the volume hologram recording layer (photosensitive layer).

On the other hand, in the holographic optical element of the present embodiment, it is considered that polymerization of the polymerizable monomer is promoted at the interface between the photosensitive layer and the adjacent layer, as described above. Therefore, the diffraction grating surely formed up to the vicinity of the interface can enhance the adhesion between the adjacent layer and the volume hologram recording layer. Thereby, the holographic optical element of the present embodiment exhibits excellent durability such that peeling between the volume hologram recording layer and the adjacent layer is not likely to occur over a long term, and high diffraction efficiency can be maintained for a long period of time.

As described above, according to the present invention, a means for improving the diffraction efficiency of a holographic optical element having a volume hologram recording layer is provided. Further, according to the present invention, a means for improving the durability of the holographic optical element is provided.

The above mechanism is described by estimation, and the holographic optical element of the present embodiment is not restricted by the above mechanism at all.

Hereinafter, preferred embodiments will be described in more detail, but the present invention is not limited only to the following embodiments.

As used herein, the "(from) X to Y" indicating the range means "X or more and Y or less", including X and Y. In addition, unless otherwise stated, the operations and the measurements of physical properties are conducted under the conditions of room temperature (20 to 25°C)/relative humidity of 40 to 50% RH.

[Overall Configuration of Holographic Optical Element]

First, the overall configuration of the holographic optical element of the present embodiment will be described.

Fig. 1 is a schematic cross-sectional view showing a typical configuration of a holographic optical element of the present embodiment. The holographic optical element 10 includes a volume hologram recording layer 11 and a pair of adjacent layers 12. In the holographic optical element shown in Fig. 1, a pair of adjacent layers 12 is provided so as to be in contact with both surfaces of the volume hologram recording layer 11, but the adjacent layer 12 may be provided only on one side of the volume hologram recording layer 11.

[Adjacent Layer]

The adjacent layer of the holographic optical element of the present embodiment contains a resin as a base material and a thiol compound. When forming a photopolymer contained in the volume hologram recording layer, such a thiol compound can exert a function like a chain transfer agent for radical polymerization. During the holographic exposure, the thiol compound moves in the adjacent layer, in conjunction with the diffusion movement phenomenon of the polymerizable monomer, the photopolymer or the like in the photosensitive layer, and promotes formation of the diffraction grating near the interface with the adjacent layer, in the photosensitive layer. Therefore, the thiol compound contained in the adjacent layer can improve the diffraction efficiency by the mechanism as described above, and furthermore, an effect that peeling between the volume hologram recording layer and the adjacent layer is not likely to occur over a long term and thus the holographic optical element is excellent in durability can also be obtained.

The adjacent layer having the above configuration may be provided so as to be in contact with both surfaces of the volume hologram recording layer or may be provided so as to be in contact with only one side. That is, the holographic optical element of the present embodiment may have at least one adjacent layer containing a resin and a thiol compound, which is in contact with the volume hologram recording layer. When adjacent layers are provided on both faces of the volume hologram recording layer, the constituent material and thickness of each adjacent layer may be the same or different.

<Resin>

As the resin contained in an adjacent layer, a known resin having transparency can be used. Specific examples include acrylic resins, polycarbonate, polyethylene terephthalate, polybutylene terephthalate, polyethylene naphthoate, polyethylene, polypropylene, amorphous polyolefin, cellulose acetate, hydrated cellulose, cellulose nitrate, cycloolefin

polymers, polystyrene, polyepoxide, polysulfone, cellulose acylate, polyamide, polyimide, polystyrene, polymethyl methacrylate, polyvinyl chloride, polyvinyl butyral, polydicyclopentane diene, and the like. These resins may be used singly or in combination of two or more kinds. The amount of the resin in an adjacent layer is preferably 70% by mass or more. Also, the upper limit is not particularly limited, but is preferably 99.999% by mass or less, more preferably 99.995% by mass or less, and particularly preferably 99.5% by mass or less.

From the viewpoint of excellent optical characteristics, polyethylene terephthalate, cycloolefin polymer, cellulose acylate and polymethyl methacrylate are preferable. Further, cellulose acylate has a density at which a thiol compound easily moves in the adjacent layer, and has a high surface energy that can have an affinity with a thiol group (-SH) of a thiol compound. Therefore, cellulose acylate is more preferable from the viewpoint of easily contributing to the improvement of diffraction efficiency and durability.

β-1,4-Linked glucose units constituting cellulose have free hydroxy groups at 2, 3 and 6 positions. The cellulose acylate is a polymer obtained by acylating a part or all of these hydroxy groups with an acyl group. The degree of substitution of an acyl group is the sum of the proportions of cellulose esterified at 2, 3 and 6 positions of the repeating unit. Specifically, the degree of substitution is 1 when each of the hydroxy groups at 2, 3 and 6 positions of cellulose is esterified to 100%. Therefore, when all of 2, 3 and 6 positions of cellulose are esterified to 100%, the degree of substitution becomes 3 at maximum. The degree of substitution of an acyl group can be measured according to ASTM-D817-96. The degree of substitution of the acyl group is preferably from 1.80 to 2.68 and more preferably from 2.40 to 2.65, from the viewpoint of the density of an adjacent layer.

Examples of the acyl group include an acetyl group, an n-propionyl group, an isopropionyl group, an n-butanoyl group, an isobutanoyl group, a t-butanoyl group, a pentanoyl group, a hexanoyl group, a heptanoyl group, an octanoyl group, a decanoyl group, a dodecanoyl group, a tridecanoyl group, a tetradecanoyl group, a hexadecanoyl group, an octadecanoyl group, a cyclohexanecarbonyl group, an oleoyl group, a benzoyl group, a naphthylcarbonyl group, a cinnamoyl group, or aromatic acyl groups represented by the following general formula (I), and the like.

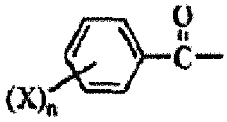

General Formula (I)

wherein X represents a methyl group, an ethyl group, an n-propyl group, an isopropyl group, an n-butyl group, an isobutyl group, a t-butyl group, a pentyl group, a hexyl group, a heptyl group or an octyl group, n is an integer of 1 to 5, and when n is 2 or more, a plurality of Xs may be linked to each other to form a ring.

Among these acyl groups, an acetyl group, an n-propionyl group, an n-butanoyl group, a t-butanoyl group, a dodecanoyl group, an octadecanoyl group, an oleoyl group, a benzoyl group, a naphthylcarbonyl group, a cinnamoyl group, aromatic acyl groups represented by the above general formula (I) are more preferable, an acetyl group, an n-propionyl group, an n-butanoyl group, a t-butanoyl group, a benzoyl group and aromatic acyl groups represented by the above general formula (I) are further preferable, and an acetyl group is particularly preferable.

From the viewpoint of easily controlling the density of an adjacent layer within an appropriate range or the like, the degree of substitution of an acetyl group of cellulose acylate is preferably 1.80 to 2.68, and more preferably 2.40 to 2.65.

The weight average molecular weight (Mw) of cellulose acylate is preferably in the range of 75000 to 280000 and more preferably in the range of 100000 to 240000, from the viewpoint of securing uniformity of optical properties and ensuring productivity and processability.

The weight average molecular weight (Mw) of cellulose acylate can be measured using gel permeation chromatography (GPC) under the following measurement conditions.

Solvent: Methylene chloride
Column: SHODEX (registered trademark) K806, K805, K803G (manufactured by Showa Denko K.K., three columns are connected and used)
Column temperature: 25°C
Sample concentration: 0.1% by mass
Detector: RI Model 504 (manufactured by GL Sciences Inc.)
Pump: L6000 (manufactured by Hitachi, Ltd.)
Flow rate: 1.0 ml/min
Calibration curve: A curve calibrated with 13 samples of standard polystyrene STK standard polystyrene (manufactured by Tosoh Corporation) with Mw of 1000000 to 500 is used. 13 samples are used at almost equal intervals.

The amount of cellulose acylate in the adjacent layer is preferably 99.999% by mass or less, more preferably

from 70 to 99.995% by mass, and particularly preferably from 70 to 99.5% by mass,relative to the total mass of the adjacent layer.

<Thiol Compound>

An adjacent layer of the present embodiment contains a thiol compound together with the above resin. The thiol compound is not particularly limited as long as it has at least one thiol group (-SH). The thiol compound can act as a chain transfer agent for radical polymerization of a polymerizable monomer. Such a thiol compound promotes the polymerization of the polymerizable monomer to the interface with the adjacent layer at the time of forming the volume hologram recording layer and promotes the formation of diffraction grating. As a result, a holographic optical element having excellent diffraction efficiency can be fabricated.

The molecular weight of the thiol compound used in the present embodiment is not particularly limited, but it is preferably 80 to 330. By setting the molecular weight of the thiol compound to 330 or less, it is easy for the thiol compound to move in the adjacent layer, and at the time of preparing the volume hologram recording layer, following the diffusion movement phenomenon of the polymerizable monomer or the like in the photosensitive layer, thus the thiol compound is easily present near the interface. As a result, the diffraction grating is surely formed at the interface, which contributes to the improvement of diffraction efficiency and the improvement of durability. On the other hand, by setting the molecular weight to 80 or more, it is possible to suppress the plasticization of the adjacent layer due to the small molecular weight of the thiol compound, and further improve the durability. From such a viewpoint, the molecular weight of the thiol compound is more preferably from 100 to 250, and particularly preferably from 110 to 230.

When the molecular structure of the thiol compound in the adjacent layer is known, a value determined based on its composition is adopted as the molecular weight of the thiol compound. Also, when the structure of the thiol compound contained in the adjacent layer is unknown, a sample which is obtained by immersing the adjacent layer in the eluent of liquid chromatography for 60 minutes and eluting the thiol compound is analyzed by LCMS (liquid chromatography-mass spectrometry), whereby the structure (molecular weight) of the thiol compound can be measured. In addition, after isolating the thiol compound by liquid chromatography (LC) or high performance liquid chromatography (HPLC), it can be analyzed by mass spectrum analysis.

As the thiol compound, any compound having a thiol group can be used without particular limitation. Specific examples of the compound include the following compounds.

Compounds having one thiol group (monofunctional thiol compounds) such as alkane thiol compounds such as ethyl mercaptan, n-butyl mercaptan, t-butyl mercaptan, 1-dodecyl mercaptan (n-dodecanethiol), and 1-octadecanethiol;

heterocyclic mercaptans such as 3-mercapto-1,2,4-triazole, 4-methyl-4H-1,2,4-triazole-3-thiol, 3-amino-5-mercapto-1,2,4-triazole, 4-amino-3-hydrazino-5-mercapto-1,2,4-triazole, 4-cyclohexyl-5-mercapto-4H-1,2,4-triazol-3-ol; 2-mercaptooxazole; 2-mercaptobenzoxazole; 2-mercaptothiazole; 2-mercaptobenzothiazole, 5-chloro-2-mercaptobenzothiazole, 6-ethoxy-2-mercaptobenzothiazole, 6-amino-2-mercaptobenzothiazole, 6-nitro-2-mercaptobenzothiazole; 2-mercaptoimidazole, 4,5-diphenyl-2-imidazolethiol; 2-mercaptobenzimidazole, 2-mercapto-5-methylbenzimidazole; 2-amino-5-mercapto-1,3,4-thiadiazole, 5-amino-1,3,4-thiadiazole-2-thiol, and 2,5-dimercapto-1,3,4-thiadiazole;

mercaptocarboxylic acids such as thioglycolic acid (2-mercaptoacetic acid);

mercaptocarboxylic acid esters such as methyl thioglycolate, 2-ethylhexyl thioglycolate, n-octyl 3-mercaptopropionate, methoxybutyl 3-mercaptopropionate, and stearyl 3-mercaptopropionate; and

aromatic mercaptans such as benzene thiol, m-toluene thiol, p-toluene thiol, and 2-naphthalene thiol.

Compounds having two thiol groups (bifunctional thiol compounds) such as alkanedithiol compounds such as 1,2-ethanedithiol, 1,3-propanedithiol, 1,4-butanedithiol, 2,3-butanedithiol, 1,5-pentanedithiol and 1,6-hexanedithiol; and ester compounds of a dihydric alcohol and mercaptocarboxylic acid such as 1,2-propyleneglycol bis(mercaptoacetate), 1,2-propyleneglycol bis(2-mercaptopropionate), 1,2-propyleneglycol bis(3-mercaptobutyrate) ethyleneglycol bis(mercaptoacetate), ethyleneglycol bis(2-mercaptopropionate), ethylene glycol bis(3-mercaptobutyrate), 1,4-butanediol bis(mercaptoacetate), 1,4-butanediol bis(3-mercaptopropionate), and 1,4-butanediol bis(3-mercaptobutyrate)(1,4-bis(3-mercaptobutyryloxy)butane).

Compounds having three thiol groups (trifunctional thiol compound) such as heterocyclic mercaptans such as 2,4,6-trimercapto-s-triazine and 2,4,6-trimercapto-1,3,5-triazine; and

ester compounds of a trihydric alcohol and mercaptocarboxylic acid such as trimethylolethane tris(3-mercaptobutyrate) and trimethylolpropane tris(3-mercaptobutyrate).

The thiol compound may be a polyfunctional thiol compound having four or more thiol groups. Also, these thiol compounds can be used singly or in combination of two or more kinds.

In addition, the thiol compound is preferably a mercaptan having a heterocyclic ring (heterocyclic mercaptan compound). Here, the heterocyclic ring represents a monocyclic heterocyclic ring composed of a 5-membered ring or 6-membered ring containing 1 to 4 hetero atoms selected from the group consisting of a nitrogen atom, an oxygen atom

and a sulfur atom, or a polycyclic fused heterocyclic ring having two or more rings. Such mercaptans tend to have high compatibility with the resin forming the adjacent layer and to have excellent transfer capability in the adjacent layer. Therefore, the effect of polymerization promotion near the interface with the adjacent layer is improved.

Among them, those having a triazole skeleton, a benzoxazole skeleton or a benzothiazole skeleton are preferable. Since these compounds have particularly high compatibility with the resin forming the adjacent layer and have excellent transfer capability in the adjacent layer, polymerization promotion at the interface with the adjacent layer becomes favorable, and the diffraction efficiency and its durability are further improved. From the above viewpoint, it is further preferable that the thiol compound has a benzoxazole skeleton or a benzothiazole skeleton.

The above effect becomes particularly prominent when the resin contained in the adjacent layer contains polyethylene terephthalate, a cycloolefin polymer, cellulose acylate or polymethyl methacrylate and the thiol compound contained in the adjacent layer has a triazole skeleton, a benzoxazole skeleton or a benzothiazole skeleton.

The thiol compound is contained in the adjacent layer, and it is preferably at least present near the interface with the volume hologram recording layer. More specifically, in the adjacent layer, it is preferable that the thiol compound is contained in the region which has a thickness of at least up to 100 nm from the interface between the adjacent layer and the volume hologram recording layer (herein sometimes referred to as "region A"). The presence of the thiol compound within such a range promotes the interaction between the thiol compound and the volume hologram recording layer (the photosensitive layer), whereby the effect of improving the diffraction efficiency as described above can be further improved.

Further, in the adjacent layer, in the region whose distance is 100 nm or less from the interface between the volume hologram recording layer and the adjacent layer (region A), the mass ratio (content ratio; $C_2$ in the Examples) of the thiol compound to the total mass of the adjacent layer occupying the range (region A) is preferably within a specific range. Specifically, when the total mass of the adjacent layer in the region A is 100% by mass, the content ratio ($C_2$) of the thiol compound in the region A is preferably 0.001 to 3.5% by mass, more preferably 0.005 to 3.5% by mass, still more preferably 0.005 to 3.2% by mass, and particularly preferably 0.005% by mass or more and less than 3.1% by mass.

By setting the content ratio ($C_2$) of the thiol compound in the region A to 0.001% by mass or more, and further 0.005% by mass or more, the polymerization of the polymerizable monomer near the interface with the adjacent layer in the volume hologram recording layer is sufficiently promoted, which contributes to further improvement of diffraction efficiency. On the other hand, when the content ratio ($C_2$) of the thiol compound in the region A is 3.5% by mass or less, further 3.2% by mass or less, and further less than 3.1% by mass, peeling between the volume hologram recording layer and the adjacent layer is less likely to occur, which is preferable in that durability is improved. Moreover, by setting the content ratio of the thiol compound within the above range, durability can also be improved.

Furthermore, from the viewpoint of being capable of promoting the polymerization of the polymerizable monomer at the interface of the adjacent layer in the volume hologram recording layer and also suppressing peeling between the volume hologram recording layer and the adjacent layer, the content ratio ($C_2$) of the thiol compound in the region A is still more preferably 0.005 to 3.0% by mass, still more preferably 0.005 to 2.9% by mass, particularly more preferably 0.01 to 2.9% by mass, and most preferably 0.03 to 1.5% by mass. Incidentally, the content ratio ($C_2$) of the thiol compound in the region A is measured by the method described in the Examples. Also, when two or more kinds of thiol compounds are contained, the content ratio ($C_2$) is calculated based on the total mass.

The mass ratio (content ratio; $C_1$ in the Examples) of the thiol compound to the mass of the entire adjacent layer is not particularly limited, but is preferably 0.000001 to 3.5% by mass, more preferably 0.00001% by mass or more and less than 3.1% by mass, still more preferably 0.001 to 2.9% by mass, still more preferably 0.005 to 2.9% by mass, particularly preferably 0.01 to 2.9% by mass, and most preferably 0.01 to 1.5% by mass. By setting the content ratio ($C_1$) of the thiol compound to the mass of the entire adjacent layer within the above range, polymerization of the polymerizable monomer near the interface with the adjacent layer in the photosensitive layer can be effectively promoted. Incidentally, the content ratio ($C_1$) of the thiol compound to the mass of the entire adjacent layer is measured by the method described in the Examples. Also, when two or more kinds of thiol compounds are contained, the content ratio ($C_1$) is calculated based on the total mass.

The adjacent layer preferably contains a thiol compound in the region A, and may be, for example, a form in which a thiol compound is unevenly distributed in the adjacent layer (form (i)), or a form in which a thiol compound is contained over the entire adjacent layer (form (ii)).

That is, the form (i) is a form in which a first layer containing at least a resin and a thiol compound and a second layer not containing thiol compound but containing at least a resin are laminated to form an adjacent layer. Further, the adjacent layer of the form (i) may be formed not only by laminating the first layer and the second layer one by one, but also the first layer and/or the second layer may be composed of a plurality of layers. In the case where the first layer is composed of a plurality of layers, the thiol compounds and the resins contained in the respective layers may be the same or different. Also, in the case where the second layer is composed of a plurality of layers, the resins contained in the respective layers may be the same or different.

The adjacent layer of the form (ii) is a form in which the thiol compound and the resin are substantially uniformly

dispersed in the layer. Such a form (film) can be formed by employing a known method or appropriately modifying the known method.

Even when the adjacent layer is in any of the forms (i) and (ii), the effect of improving the diffraction efficiency can be obtained, and further, the effect of improving the durability can be sufficiently obtained.

The thickness of the adjacent layer is not particularly limited, but is preferably 10 to 1000 μm, and more preferably 50 to 200 μm. The "thickness of the adjacent layer" in the above embodiment (i) refers to the total thickness of the first layer and the second layer.

In the above, the adjacent layer in the form of a film has been described, but the adjacent layer may be in the form of a layer such as a film or plate or may be a substrate form also serving as a prism. When the adjacent layer is in the form of a layer, processing by cutting is possible, and there is the convenience that it can be adopted to various optical elements.

[Method of Forming Adjacent Layer]

The method for forming an adjacent layer into the form of a layer such as a film or the like is not particularly limited, and any conventionally known method such as a melt extrusion method, a solution casting method, a calendar method or a compression molding method can be used. Among these methods, a melt extrusion method and a solution casting method are preferable.

The melt extrusion method includes a method in which a resin, a thiol compound, and other components added as necessary are melt-kneaded and then formed into a film by melt extrusion. A kneader used for kneading is not particularly limited, and for example, a conventionally known kneading machine such as an extruder such as a single screw extruder or a twin screw extruder or a pressure kneader can be used. Also, the melt extrusion method for forming into a film includes a T-die method, an inflation method, and the like. The molding temperature at the time of melt extrusion varies depending on the type of the resin, so it cannot be said definitely, but it is preferably from 200 to 350°C. In the case of forming into a film by the T-die method, a T-die is attached at the tip of a known single screw extruder or twin screw extruder to wind a film extruded into a film, whereby a roll-shaped film can be obtained. At this time, by using a T-die for a single layer as shown in Fig. 2 as the T-die to be used, it is possible to easily form the adjacent layer of the form (ii). On the other hand, in the case of forming the adjacent layer of the form (i), it can be easily formed by using a co-extrusion T-die as shown in Fig. 3. In this case, an adjacent layer composition (composition for the first layer) containing a resin, a thiol compound, and other components added as necessary may be introduced into one pocket of the co-extrusion T-die, and the other adjacent layer composition (composition for the second layer) containing no thiol compound and containing at least a resin may be introduced into the other pocket. Also, in the case where each of the first layer and/or the second layer is composed of a plurality of layers, by using a co-extrusion T-die having pockets corresponding to the total number thereof, it is possible to form an adjacent layer having the first layer and/or the second layer composed of a plurality of layers can be easily formed.

Further, at this time, it is also possible to appropriately adjust the temperature of the winding roll and stretch a film in the extrusion direction, thereby making it a uniaxial stretching step. It is also possible to add steps such as a sequential biaxial stretching and a simultaneous biaxial stretching through adding a step of stretching the film in a direction perpendicular to the extrusion direction. In order to stabilize the optical isotropy and mechanical characteristics of the film, it is also possible to perform heat treatment (annealing) or the like after the stretching treatment.

In addition, the solution casting method includes a method of preparing a solution or dispersion (dope) containing a resin, a thiol compound, and other components added as necessary, and then casting the solution or dispersion, and the like.

The solvent used for the solution casting method is not particularly limited, and examples thereof include chlorine-based solvents such as chloroform and methylene chloride; aromatic solvents such as toluene, xylene, benzene, and mixtures thereof; alcohol solvents such as methanol, ethanol, n-propanol, 2-propanol, n-butanol, sec-butanol, t-butanol, 2,2,2-trifluoroethanol, 2,2,3,3-tetrafluoro-1-propanol, 1,3-difluoro-2-propanol, 1,1,1,3,3,3-hexafluoro-2-methyl-2-propanol,1,1,1,3,3,3-hexafluoro-2-propanol, and 2,2,3,3,3-pentafluoro-1-propanol; methylcellosolve, ethylcellosolve, butylcellosolve, dimethylformamide, dimethylsulfoxide, 1,3-dioxolane, 1,4-dioxane, cyclohexanone, tetrahydrofuran, acetone, methyl ethyl ketone (MEK), methyl acetate, ethyl acetate, amyl acetate, diethyl ether, nitroethane, and the like. These solvents may be used singly or in combination of two or more kinds. Examples of the apparatus for performing the solution casting method include a stainless steel band, a drum type casting machine, a band type casting machine, a spin coater, and the like.

In the solution casting method, in the case of forming the adjacent layer in the form (ii), a film is preferably formed by a method including a step of casting the dope onto the above apparatus, a step of drying the cast dope as a web, a step of peeling the web from the apparatus after drying, a step of holding the web in the stretching or width direction, a step of further drying the web and the like, whereby an adjacent layer is formed. Also, in the case of forming the adjacent layer of the above (i), it is preferable to perform a step of casting a first dope (the adjacent layer composition

containing a resin, a thiol compound and a solvent, and other components added as necessary) on an apparatus and drying the first dope, then a step of casting a second dope (other adjacent layer composition containing no thiol compound and containing at least a resin and a solvent) on the first dope and drying the second dope to form a web, a step of peeling the web from the apparatus after drying, a step of holding the web in the stretching or width direction, a step of further drying the web, and the like. In addition, in the case where each of the first layer and/or the second layer is composed of a plurality of layers, a plurality of first and/or second dope is prepared corresponding to the layer constitution, and the above steps may be repeated as appropriate so as to laminate these layers.

As a method for forming the adjacent layer into a substrate form, an injection molding method can be used. Preparation of the substrate by injection molding is carried out by melt kneading of the adjacent layer component, injection from the kneader into a mold, cooling with the mold and removal of the substrate.

For melt kneading of the resin and other components, a conventionally known kneader such as an extruder such as a single screw extruder, a twin screw extruder or a pressure kneader can be used. At that time, in order to secure uniformity of the kneaded material, it is preferable to conduct melt-kneading while heating at a temperature higher than the glass transition temperature (Tg) of the resin.

From the viewpoint of ensuring molding accuracy, securing optical characteristics of molded articles and the like, it is important to control the injection amount of the kneaded material and the temperature of the mold. The injection amount can be adjusted by the amount of pressurization from the kneader to the mold, the diameter of the inner which becomes the path of the kneaded material to the mold and the applied temperature to the inner, and the like. The temperature of the mold during the injection of the kneaded material is preferably set to be equal to or lower than the Tg of the resin. As a result, dimensional accuracy can be ensured. In addition, in order to secure the optical characteristics, the preferable cooling temperature is in the range of Tg or lower to Tg - 100°C, still preferably in the range of Tg or lower to Tg - 50°C, and further preferably in the range of Tg or lower to Tg - 20°C.

[Volume Hologram Recording Layer]

The volume hologram recording layer is prepared by at least subjecting holographic exposure to a coating film (photosensitive layer) obtained by applying a photosensitive composition containing a polymerizable monomer, and a photopolymerization initiator and a matrix resin or a precursor thereof added as necessary to the adjacent layer described above and drying it, to form a diffraction grating composed of a high refractive index region and a low refractive index region in the photosensitive layer. As a result of polymerizing the polymerizable monomer by performing holographic exposure as described above, the volume hologram recording layer contains a photopolymer. The "photopolymer" herein refers to a polymer obtained as a result of polymerization of the polymerizable monomer contained in the photosensitive composition described above.

More specifically, the photosensitive composition used for forming the volume hologram recording layer may contain, in addition to the radical polymerizable monomer, a photopolymerization initiator, a matrix resin or a precursor thereof, a sensitizer, a chain transfer agent, a solvent, and the like. Hereinafter, these components will be described.

<Radical Polymerizable Monomer>

As the radical polymerizable monomer, those having a relatively high refractive index are preferable, and examples thereof include acrylamide, methacrylamide, methylenebisacrylamide, polyethylene glycol diacrylate, trimethylolpropane triacrylate, pentaerythritol triacrylate, dipentaerythritol hexaacrylate, 2,3-dibromopropyl acrylate, dicyclopentanyl acrylate, dibromoneopentyl glycol diacrylate, 2-phenoxyethyl acrylate, 2-phenoxymethyl methacrylate, phenol ethoxylate monoacrylate, 2-(p-chlorophenoxy)ethyl acrylate, p-chlorophenyl acrylate, phenyl acrylate, 2-phenylethyl acrylate, 2-(1-naphthyloxy)ethyl acrylate, o-biphenyl methacrylate, o-biphenyl acrylate, styrene, methoxystyrene, benzyl acrylate, phenyl acrylate, 2-phenylethyl acrylate, 2-phenoxyethyl acrylate, 2-phenoxyethyl methacrylate, phenol ethoxylate acrylate, methylphenoxyethyl acrylate, nonylphenoxyethyl acrylate, 2-hydroxy-3-phenoxypropyl acrylate, phenoxypolyethyleneglycol acrylate, 1,4-benzenediol dimethacrylate, 1,4-diisopropenylbenzene, 1,3,5-triisopropenylbenzene, benzoquinone monomethacrylate, 2-(1-naphthyloxy)ethyl acrylate, 2,3-naphthalenedicarboxylic acid (acryloxyethyl) monoester, di(3-methacryloxy-2-hydroxypropyl) ether of diphenolic acid, (3-acryloxyethyl hydrogen phthalate, 2,2-di(p-hydroxyphenyl)propane diacrylate, 2,3-di(p-hydroxyphenyl)propane dimethacrylate, 2,2-di(p-hydroxyphenyl)propane dimethacrylate, polyoxyethylene-2,2-di(p-hydroxyphenyl)propane dimethacrylate, di(2-methacryloxyethyl) ether of bisphenol A, ethoxylated bisphenol A diacrylate, di(3-acryloxy-2-hydroxypropyl)ether of bisphenol A, di(2-acryloxyethyl)ether of bisphenol A, 2,2-bis(4-acryloxyethoxyphenyl)propane, 2,2-bis(4-methacryloxyethoxyphenyl)propane, 2,2-bis(4-acryloxydiethoxyphenyl)propane, 2,2-bis(4-methacryloxydiethoxyphenyl)propane, bis(4-acryloxydiethoxyphenyl)methane, bis(4-methacryloxydiethoxyphenyl)methane, 2-chlorostyrene, 2-bromostyrene, 2-(p-chlorophenoxy)ethyl acrylate, di(3-acryloxy-2-hydroxypropyl)ether of tetrachloro-bisphenol A, di(2-methacryloxyethyl)ether of tetrachloro-bisphenol A, di(3-methacryloxy-2-hydroxypropy)ether of tetrabromo-bisphenol A, di(2-methacryloxyethyl)ether of tetrabromo-bisphenol A, bis(4-acryloxyethoxy-3,5-dibromophenyl)methane, bis(4-methacryloxyethoxy-3,5-dibromophenyl)methane, 2,2-bis(4-acryloxyethoxy-3,5-dibromophenyl)propane, 2,2-bis(4-methacryloxyethoxy-3,5-dibromophenyl)propane, bis(4-acryloxyethoxyphenyl)sulfone, bis(4-methacryloxyethoxyphenyl)sulfone, bis(4-acryloxydiethoxyphenyl)sulfone, bis(4-methacryloxydiethoxyphenyl)sulfone, bis(4-acryloxypropoxyphenyl)sulfone, bis(4-methacryloxypropoxyphenyl)sulfone, diethylenedithioglycol diacrylate, diethylenedithioglycol dimethacrylate, triphenylmethylthioacrylate,
2-({[3-(methylsulfanyl)phenyl]carbamoyl}oxy)ethylprop-2-enoate, 2-(tricyclo[5.2.1.$0^{2,6}$]dibromodecylthio)ethyl acrylate, S-(1-naphthylmethyl)thioacrylate, ethylenically unsaturated bond-containing compounds containing at least two or more sulfur atoms in the molecule described in JP H2-247205 A and JP H2-261808 A, N-vinylcarbazole, 2-(9-carbazolyl)ethyl acrylate, 2-[β-(N-carbazyl)propionyloxy]ethyl acrylate, 2-naphthyl acrylate, pentachlorophenyl acrylate, 2,4,6-tribromophenyl acrylate, 2-(2-naphthyloxy)ethyl acrylate, N-phenylmaleimide, p-biphenyl methacrylate, 2-vinyl naphthalene, 2-naphthyl methacrylate, 2,3-naphthalene dicarboxylic acid (2-acryloxyethyl) (3-acryloxypropyl-2-hydroxy) diester, N-phenyl methacrylamide, t-butylphenyl methacrylate, diphenic acid (2-methacryloxyethyl) monoester, diphenic acid (2-acryloxyethyl) (3-acryloxypropyl-2-hydroxy) diester, 4,5-phenanthrene dicarboxylic acid (2-acryloxyethyl) (3-acryloxypropyl-2-hydroxy) diester, and the like.

Also, examples thereof include those having a 9,9-diarylfluorene skeleton and having at least one ethylenically unsaturated bond in the molecule. Specifically, it is a compound having the following structure.

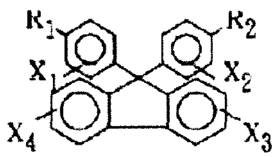

Herein, $R_1$ and $R_2$ are each independently a radically polymerizable group having an acryloyl group or a methacryloyl group at the terminal. A preferred embodiment is a group having an acryloyl group or a methacryloyl group at the terminal and capable of bonding to the benzene ring of the above-described compound, via an oxyethylene chain, an oxypropylene chain, a urethane bond, an amide bond, or the like.

Also, $X_1$ to $X_4$ are each independently a hydrogen atom or a substituent. Specific examples of the substituent include alkyl groups having 1 to 4 carbon atoms, alkoxy groups having 1 to 4 carbon atoms, amino groups, dialkylamino groups, hydroxyl groups, carboxyl groups, halogen atoms, and the like.

A urethane acrylate comprising a condensation product of a phenyl isocyanate compound and a compound having a hydroxy group and an ethylenically unsaturated bond such as an acryloyl group in one molecule can also be used. Specifically, it is a compound having the following structure.

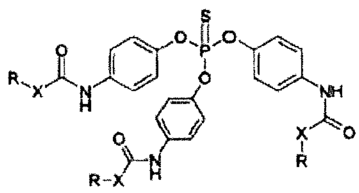
(I)

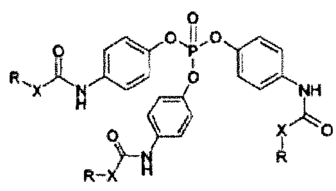
(II)

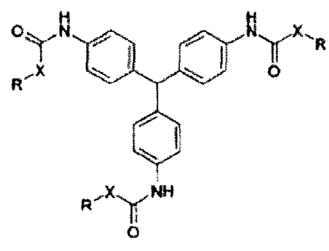
(III)

In the above chemical formulas (I) to (III), Rs are each independently a group having an ethylenically unsaturated bond, and Xs are each independently a single bond, an oxygen atom, or a linear, branched or cyclic divalent aliphatic hydrocarbon group.

A compound having a structure represented by the following chemical formula (IV) can also be used.

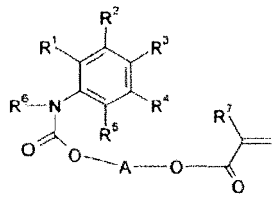

(IV)

In the above chemical formula (IV), $R^1$ to $R^5$ are each independently a hydrogen atom, a halogen atom, an alkyl group having 1 to 6 carbon atoms, a trifluoromethyl group, an alkylthio group having 1 to 6 carbon atoms, an alkylseleno group having 1 to 6 carbon atoms, an alkyltelluro group having 1 to 6 carbon atoms or a nitro group, and $R^6$ and $R^7$ are each independently a hydrogen atom or an alkyl group having 1 to 6 carbon atoms.

A is a linear or branched alkylene group having 1 to 6 carbon atoms, a linear or branched alkenylene group having 2 to 6 carbon atoms, or a polyalkylene oxide group having an ethylene oxide unit or propylene oxide unit having 2 to 6 carbon atoms.

Among these, it is preferable that $R^1$ to $R^5$ are each independently a hydrogen atom or an alkylthio group having 1 to 6 carbon atoms, $R^6$ and $R^7$ are hydrogen atoms, and A is a linear or branched alkylene group having 2 to 6 carbon atoms.

Among these radical polymerizable monomers, a monomer having a substituted or unsubstituted phenyl group, a monomer having a substituted or unsubstituted naphthyl group, a monomer having a substituted or unsubstituted heterocyclic aromatic moiety having up to 3 rings, a monomer having a chlorine atom and a monomer having a bromine atom are preferable because of their relatively high refractive index.

These radical polymerizable monomers can be used singly or in combination of two or more kinds.

The amount of the radical polymerizable monomer in the photosensitive composition is preferably from 1 to 25% by mass, and more preferably from 5 to 20% by mass, relative to the total amount of the photosensitive composition.

<Radical Polymerization Initiator>

The radical polymerization initiator is an agent which initiates photopolymerization of the radical polymerizable monomer by irradiation with laser light having a specific wavelength or light having excellent coherence in holographic exposure. As photo-radical polymerization initiators that can be used for such reactions, for example, known polymerization initiators described in US 4,766,055, US 4,868,092 and US 4,965,171, JP S54-151024 A, JP S58-15503 A, JP S58-29803 A, JP 59-189340 A, JP 60-76735 A, JP H1-28715 A and JP H4-239505 A, "PROCEEDINGS OF CONFERENCE ON RADIATION CURING ASIA" (pp. 461-477, 1988) and the like can be used, but are not limited thereto.

Specific examples of the photo-radical polymerization initiator include diaryl iodonium salts, 2,4,6-substituted-1,3,5-triazines (triazine compounds), azo compounds, azide compounds, organic peroxides, organic borates, onium salts, halogenated hydrocarbon derivatives, titanocene compounds, monoacylphosphine oxides, bisacylphosphine oxides, combinations of bisacylphosphine oxides and $\alpha$-hydroxyketones, and the like. In addition, a photo-radical polymerization initiator system based on a combined use of a hydrogen donor such as a thiol compound and a bisimidazole derivative can be utilized. These photo-radical polymerization initiators may be used singly or in combination of two or more kinds.

The amount of the photo-radical polymerization initiator to be used is preferably 0.05 to 50 parts by mass, and more preferably 0.1 to 30 parts by mass, relative to 100 parts by mass of the radical polymerizable monomer.

<Sensitizer>

The photosensitive composition may contain a sensitizer having a sensitizing function for a photo-radical polymerization initiator. Such a sensitizer has an absorption maximum wavelength in the range of 400 to 800 nm, especially 450 to 700 nm. These sensitizers absorb the light within the above-mentioned range, whereby sensitizing action occurs on the photo-radical polymerization initiator.

Examples of such sensitizers include polymethine-based compounds such as cyanine-based dyes and styryl-based dyes, xanthene-based compounds such as rhodamine B, rhodamine 6G and pyronin GY, phenazine-based compounds such as safranin O, phenoxazine-based compounds such as cresyl violet and brilliant cresylblue, phenothiazine-based compounds such as methylene blue and new methylene blue, diarylmethane-based compounds such as auramine, triarylmethane-based compounds such as crystal violet, brilliant green and Lissamine Green, (thio)pyrylium salt-based compounds, squarylium-based compounds, coumarin-based dyes, thioxanthene-based dyes, acene-based dyes, merocyanine-based dyes, thiazolium-based dyes, and the like. These sensitizers can be used singly or in combination of two or more kinds.

When a sensitizer is used, the amount used is preferably from 1 to 2,000 parts by mass, and more preferably from 20 to 1,500 parts by mass, relative to 100 parts by mass of the photo-radical polymerization initiator.

<Chain Transfer Agent>

The photosensitive composition may contain a chain transfer agent. The chain transfer agent is not particularly limited, and a known radical chain transfer agent can be used.
Examples of the chain transfer agent include n-butyl mercaptan, t-butyl mercaptan, t-dodecyl mercaptan, n-octyl mercaptan, n-lauryl mercaptan, 5-chloro-2-mercaptobenzothiazole, 4-methyl-4H-1,2,4-triazole-3-thiol, 6-ethoxy-2-mercaptobenzothiazole and the like, as well as mercaptans such as the thiol compounds mentioned in the above section of <Thiol Compound>; disulfides such as tetramethylthiuram disulfide and tetraethylthiuram disulfide; halogen compounds such as carbon tetrachloride and carbon tetrabromide; olefins such as 2-methyl-1-butene and α-methylstyrene dimer; and the like. These chain transfer agents can be used singly or in combination of two or more kinds.
When a chain transfer agent is used, the amount used is preferably from 0.05 to 50 parts by mass, and more preferably from 0.1 to 30 parts by mass, relative to 100 parts by mass of the radical polymerizable monomer.

<Matrix Resin or Precursor Thereof>

The matrix resin functions to improve the uniformity of film thickness of the volume hologram recording layer, heat resistance, mechanical properties and the like, and to stabilize the hologram formed by holographic exposure. Further, at the time of forming the volume hologram recording layer, the matrix resin can have a function of not inhibiting the diffusion movement phenomenon of the polymerizable monomer and the photopolymer or efficiently expressing the diffusion movement phenomenon.
As the matrix resin, for example, a thermoplastic resin, a thermosetting resin, an active energy ray-curable resin and the like can be used without limitation. In addition, resins obtained by modifyng these resins with polysiloxane chains or perfluoroalkylene chains, and the like can also be used. The matrix resin can be used singly or in combination of two or more kinds.
Examples of the thermoplastic resin include, for example, polyvinyl acetate, polyvinyl butyrate, polyvinyl formal, polyvinyl carbazole, polyacrylic acid, polymethacrylic acid, polymethyl acrylate, polymethyl methacrylate, polyethyl acrylate, polybutyl acrylate, polymethacrylonitrile, polyethyl methacrylate, polybutyl methacrylate, polyacrylonitrile, poly-1,2-dichloroethylene, an ethylene-vinyl acetate copolymer, a tetrafluoroethylene-vinyl acetate copolymer, syndiotactic-type polymethyl methacrylate, poly-α-vinyl naphthalate, polycarbonate, cellulose acetate, cellulose triacetate, cellulose acetate butyrate, polystyrene, poly-α-methylstyrene, poly-o-methylstyrene, poly-p-methylstyrene, poly-p-phenylstyrene, poly-2,5-dichlorostyrene, poly-p-chlorostyrene, polyarylate, polysulfone, polyethersulfone, a styrene-acrylonitrile copolymer, a styrene-divinylbenzene copolymer, a styrene-butadiene copolymer, a styrene-maleic anhydride copolymer, an ABS resin, polyethylene, polyvinyl chloride, polypropylene, polyethylene terephthalate, polybutylene terephthalate, polyethylene naphthalate, polyvinyl pyrrolidone, polyvinylidene chloride, a hydrogenated styrene-butadiene-styrene copolymer, polyurethane, polytetrafluoroethylene, polyvinylidene fluoride, copolymers of tetrafluoroethylene or hexafluoroethylene and vinyl alcohol, vinyl ester, vinyl ether, vinyl acetal, vinyl butyral or the like, copolymers of (meth)acrylic acid cycloaliphatic ester and methyl (meth)acrylate, polyvinyl acetate, a methyl methacrylate-ethyl acrylate-acrylic acid copolymer, and the like.
Examples of the thermosetting resin include unsaturated polyester, acrylic urethane resin, epoxy-modified acrylic resin, epoxy-modified unsaturated polyester, polyurethane, alkyd resin, phenolic resin, and the like.
Examples of the active energy ray-curable resin include epoxy acrylate, urethane acrylate, acryl-modified polyester, and the like. For the purpose of adjusting crosslinking structure, viscosity and the like, these active energy ray-curable resins can contain other monofunctional or polyfunctional monomers, oligomers and the like, as described below. For example, the monofunctional monomer or oligomer is a mono(meth)acrylate such as tetrahydrofurfuryl (meth)acrylate, hydroxyethyl (meth)acrylate, (meth)acryloyloxyethyl succinate or (meth)acryloyloxyethyl phthalate, vinyl pyrrolidone. The polyfunctional monomer or oligomer is, when classified by skeleton structure, polyol (meth)acrylate (epoxy-modified polyol (meth)acrylate, lactone-modified polyol (meth)acrylate, etc.), polyester(meth)acrylate, epoxy (meth)acrylate, urethane (meth)acrylate, as well as poly (meth)acrylate having a skeleton such as polybutadiene type, isocyanuric acid type, hydantoin type, melamine type, phosphoric acid type, imide type or phosphazene type. Various monomer, oligomer and polymer which are curable by ultraviolet or electron beam can be used as the polyfunctional monomer or oligomer.
In the case of using the thermoplastic resin, thermosetting resin or active energy ray-curable resin, a metal soap such as cobalt naphthenate or zinc naphthenate, an organic peroxide such as benzoyl peroxide or methyl ethyl ketone peroxide, a heat or active energy ray curing agent such as benzophenone, acetophenone, anthraquinone, naphthoquinone, azobisisobutyronitrile or diphenyl sulfide can be contained in the photosensitive composition.

When a thermosetting resin or an active energy ray-curable resin is used, a photosensitive layer containing an uncured resin is formed on the adjacent layer and then, the uncured resin can be cured by heating or irradiation with an active energy ray. The curing may be carried out before or after the holographic exposure.

Alternatively, a matrix resin precursor may be used. Examples of the precursor include isocyanate compounds and polyol compounds which form polyurethane by addition polymerization.

The isocyanate compound is preferably one having two or more isocyanate groups in one molecule, but the type thereof is not particularly limited. When the number of isocyanate groups in one molecule is small, the required hardness as a matrix resin may not be obtained in some cases. The upper limit of the number of isocyanate groups in one molecule is not particularly limited, and is usually about 20 or less, preferably 8 or less, and further preferably 4 or less. The type is not particular limited as long as it has two or more isocyanate groups in one molecule.

Examples of the isocyanate compound used in the present embodiment include aliphatic isocyanates such as hexamethylene diisocyanate, lysine methyl ester diisocyanate and 2,4,4-trimethylhexamethylene diisocyanate, alicyclic isocyanates such as isophorone diisocyanate and 4,4'-methylenebis(cyclohexyl isocyanate); aromatic isocyanates such as tolylene diisocyanate, 4,4'-diphenylmethane diisocyanate, xylylene diisocyanate and naphthalene-1,5'-diisocyanate; multimers thereof or derivatives thereof, and the like.

Besides these, examples include reactants of water or a polyhydric alcohol such as trimethylolethane or trimethylolpropane with the isocyanate compound, and the like.

These isocyanate compounds may be used singly or in combination of two or more kinds.

Examples of the polyol compound include polypropylene polyol, polycaprolactone polyol, polyester polyol, polycarbonate polyol, ethylene glycol, propylene glycol, 1,4-butanediol, 1,5-pentanediol, 3-methyl-1,5-pentanediol, 1,6-hexanediol, neopentyl glycol, diethylene glycol, 1,4-cyclohexanediol, 1,4-cyclohexanedimethanol, decamethylene glycol, trimethylolpropane, polyethylene glycol, polypropylene glycol, polytetramethylene glycol, and the like.

These polyol compounds may be used singly or in combination of two or more kinds.

A catalyst for addition polymerization of an isocyanate compound and a polyol compound can be blended in the photosensitive composition. Although these compounds can be cured at room temperature by using a catalyst, they may be cured by heating. The temperature during curing is preferably in the range of 40 to 90°C, and the curing time is preferably 1 to 24 hours.

Examples of the catalyst include ordinary urethanation reaction catalysts such as tin compounds such as dibutyltin dilaurate, dioctyltin dilaurate and dibutyltin dioctanate, and tertiary amine compounds such as triethylamine and triethylenediamine. Among these, the tin compound has good solubility and performance as a medium, and in particular, dibutyltin dilaurate is preferable.

The amount of the catalyst to be used is preferably 0.0001% by mass or more, and more preferably 0.001% by mass or more, and is preferably 10% by mass or less, and more preferably 5% by mass or less, relative to the total amount of the isocyanate compound and the polyol compound. When these catalysts are used, from the viewpoint of securing uniformity of the coating film of the photosensitive layer, it is preferable to add the catalyst to the photosensitive composition within 10 minutes before applying the photosensitive composition on the adjacent layer.

Moreover, as another precursor of the matrix resin, a cationic polymerizable monomer may be used. The matrix resin obtained from the cationic polymerizable monomer makes it possible to form a volume hologram recording layer having excellent film strength.

Specific examples of such cationic polymerizable monomers include diglycerol polyglycidyl ether, pentaerythritol polyglycidyl ether, 1,4-bis(2,3-epoxypropoxyperfluoroisopropyl)cyclohexane, sorbitol polyglycidyl ether, trimethylolpropane polyglycidyl ether, resorcin diglycidyl ether, 1,6-hexanediol diglycidyl ether, polyethylene glycol diglycidyl ether, phenyl glycidyl ether, para-t-butylphenyl glycidyl ether, diglycidyl adipate, diglycidyl orthophthalate, dibromophenyl glycidyl ether, dibromoneopentyl glycol diglycidyl ether, 1,2,7,8-diepoxy octane, 1,6-dimethylol perfluorohexane diglycidyl ether, 4,4'-bis(2,3-epoxypropoxyperfluoroisopropyl)diphenyl ether, 3,4-epoxycyclohexylmethyl-3',4'-epoxycyclohexane carboxylate, 3,4-epoxycyclohexyloxirane, 1,2,5,6-diepoxy-4,7-methanoperhydroindene, 2-(3,4-epoxycyclohexyl)-3',4'-epoxy-1,3-dioxane-5-spirocyclohexane, 1,2-ethylenedioxy-bis(3,4-epoxycyclohexylmethane), 4',5'-epoxy-2'-methylcyclohexylmethyl-4,5-epoxy-2-methylcyclohexane carboxylate, ethylene glycol-bis(3,4-epoxycyclohexane carboxylate), bis-(3,4-epoxycyclohexylmethyl)adipate, di-2,3-epoxycyclopentyl ether, vinyl-2-chloroethyl ether, vinyl-n-butyl ether, triethylene glycol divinyl ether, 1,4-cyclohexane dimethanol divinyl ether, trimethylol ethane trivinyl ether, vinyl glycidyl ether, and the like. These cationic polymerizable monomers can be used singly or in combination of two or more kinds.

When the cationic polymerizable monomer is used, a photo cationic polymerization initiator or a thermal cationic polymerization initiator may be used.

Specific examples of the photo-cationic polymerization initiator include iodonium salts, triarylsulfonium salts, and the like. Specific examples of the iodonium salts include tetrafluoroborate, hexafluorophosphate, hexafluoroarsenate, hexafluoroantimonate, trifluoromethanesulfonate, 9,10-dimethoxyanthracene-2-sulfonate of iodonium, and the like. Specific examples of the triarylsulfonium salts include tetrafluoroborates of sulfonium such as triarylsulfonium, triphenylsulfonium, 4-t-butyltriphenylsulfonium, tris(4-methylphenyl)sulfonium, tris(4-methoxyphenyl)sulfonium and 4-thiophenyltriphenylsulfonium, hexafluorophosphate, hexafluoroarsenate, hexafluoroantimonate, trifluoromethanesulfonate, 9,10-dimethoxyanthracene-2-sulfonate of sulfonium, and the like. These photo-cationic polymerization initiators can be used singly or in combination of two or more kinds.

Specific examples of the thermal cationic polymerization initiator include cationic or protonic acid catalysts such as triflic acid salt (triflate), boron trifluoride etherate complex and boron trifluoride, and preferable thermal cationic polymerization initiators is triflate. Specific examples include diethylammonium triflate available as "FC-520" from 3M Company, triethylammonium triflate, diisopropylammonium triflate, ethyldiisopropylammonium triflate and the like (many of which are described in Modern Coatings published by R.R.Alm in October 1980). Among the aromatic onium salts also used as an active energy ray cationic polymerization initiator, there are ones that generate cationic species by heat, and these can also be used as thermal cationic polymerization initiators. Examples include "San-Aid (registered trademark) SI-60L", "San-Aid (registered trademark) SI-80L" and "San-Aid (registered trademark) SI-100L" (all manufactured by SANSHIN CHEMICAL INDUSTRY CO., LTD.). When a cationic polymerizable monomer is used as the matrix resin, the amount of the photo-cationic polymerization initiator or the thermal cationic polymerization initiator to be used is preferably 0.05 to 50 parts by mass, and more preferably 0.1 to 30 parts by mass, relative to 100 parts by mass of the cationic polymerizable monomer.

The amount of the matrix resin or its precursor in the photosensitive composition is preferably from 1 to 30% by mass, more preferably from 1 to 28% by mass, and further preferably from 5 to 27% by mass, relative to the total mass of the photosensitive composition.

<Solvent>

As the photosensitive composition, a solvent may be used as required at the time of coating. However, in the case where the photosensitive composition contains a component that is in a liquid state at room temperature, a solvent may not be required in some cases.

Examples of the solvent include aliphatic solvents such as n-pentane, n-hexane, n-heptane, n-octane, cyclohexane and methylcyclohexane; ketone solvents such as methyl ethyl ketone (2-butanone), acetone and cyclohexanone; ether solvents such as diethyl ether, isopropyl ether, tetrahydrofuran, dioxane, ethylene glycol dimethyl ether, ethylene glycol diethyl ether, diethylene glycol dimethyl ether, diethylene glycol diethyl ether, propylene glycol monomethyl ether, anisole and phenetol; ester solvents such as ethyl acetate, butyl acetate and ethylene glycol diacetate; aromatic solvents such as toluene and xylene; cellosolve solvents such as methyl cellosolve, ethyl cellosolve and butyl cellosolve; alcohol solvents such as methanol, ethanol, propanol and isopropyl alcohol; ether solvents such as tetrahydrofuran and dioxane; halogen solvents such as dichloromethane and chloroform; nitrile solvents such as acetonitrile and propionitrile; polar solvents such as N-methyl-2-pyrrolidone, N-ethyl-2-pyrrolidone, N,N-dimethylformamide and N,N-dimethylacetamide, and the like. These solvents can be used singly or in combination of two or more kinds.

<Additive>

The photosensitive composition may further contain, if necessary, additives such as a plasticizer, a compatibilizer, a polymerization inhibitor, a surfactant, a silane coupling agent, a defoaming agent, a release agent, a stabilizer, an antioxidant, a flame retardant, an optical brightener and an ultraviolet absorber.

[Method for Preparing Photosensitive Composition]

The photosensitive composition can be obtained by collectively or sequentially mixing the above-described components. Examples of an apparatus used for mixing include stirring or mixing apparatuses such as a magnetic stirrer, a homodisper, a quick homomixer, and a planetary mixer. The resulting photosensitive composition may be used after filtration, if necessary.

[Method for Producing Holographic Optical Element]

The method for producing the holographic optical element is not particularly limited, and examples thereof include a production method including forming a photosensitive layer containing a polymerizable monomer so that the photosensitive layer is in contact with an adjacent layer containing a resin and a thiol compound, and subjecting the photosensitive layer to holographic exposure to form a volume hologram recording layer.

Since the method for producing the adjacent layer is as described above, the description thereof is omitted here. Incidentally, the adjacent layer after the volume hologram recording layer is formed preferably contains a thiol compound, in the region whose distance is 100 nm or less from the interface between the volume hologram recording

layer (photosensitive layer) and the adjacent layer (region A).

Moreover, the content ratio of the thiol compound in the region A is preferably 0.001 to 3.5% by mass, more preferably 0.005 to 3.5% by mass, still more preferably 0.005 to 3.2% by mass, and particularly preferably 0.005% by mass or more and less than 3.1% by mass.

The method for forming a photosensitive layer on the adjacent layer is not particularly limited, and examples thereof include a method in which a photosensitive composition is directly applied on the adjacent layer and dried, a method in which a photosensitive composition is applied onto a separately prepared substrate and dried, followed by sticking the substrate to the adjacent layer using a laminator or the like and then peeling the substrate, and the like. Among these, from the viewpoint that the photosensitive layer is more likely to adhere to the adjacent layer and the combination with the adjacent layer promotes the formation of the diffraction grating to the interface with the adjacent layer inside the photosensitive layer, it is preferable to form a photosensitive layer by directly applying a photosensitive composition on the adjacent layer and drying it.

Examples of the substrate include resin substrates containing acryl, polycarbonate, polyethylene terephthalate, polybutylene terephthalate, polyethylene naphthoate, polyethylene, polypropylene, amorphous polyolefin, cellulose acetate, hydrated cellulose, cellulose nitrate, cycloolefin polymers, polystyrene, polyepoxide, polysulfone, cellulose acylate, polyamide, polyimide, polymethyl methacrylate, polyvinyl chloride, polyvinyl butyral, polydicyclopentane diene, or the like.

As a method of applying the photosensitive composition on the adjacent layer or on the substrate, conventionally known methods can be used, and specific examples include a spray method, a spin coating method, a wire bar method, a dip coating method, an air knife coating method, a roll coating method, a blade coating method, a doctor roll coating method, and the like.

As the drying, various conventionally known methods using a hot plate, an oven, a belt furnace or the like can be adopted. The drying temperature is not particularly limited and is, for example, in the range of 10 to 80°C, and the drying time is not also particularly limited, and is, for example, in the range of 1 to 60 minutes.

The thickness of the photosensitive layer may be appropriately set so that the volume hologram recording layer can be formed within the range of the preferable thickness described later.

A photosensitive layer is formed on the adjacent layer, and the adjacent layer and the photosensitive layer are bonded to each other and then subjected to holographic exposure, whereby the polymerization reaction of the polymerizable monomer in the photosensitive layer proceeds. As a result, the photo-cured photopolymer region and the other component region generated by the polymerization reaction are formed as the same pattern as the interference wave irradiated by holographic exposure.

When the holographic optical element of the present embodiment has a structure in which the volume hologram recording layer is sandwiched between two adjacent layers, a photosensitive layer is formed on one adjacent layer, then another adjacent layer is laminated on the photosensitive layer using a laminator or the like, whereby a holographic optical element having the above-mentioned structure can be obtained.

[Recording Method]

The method of subjecting the photosensitive layer to holographic exposure to record (write) a volume hologram to form into a volume hologram recording layer, and the method of reproducing (reading) the volume hologram are not particularly limited, and examples thereof include the following method.

First, at the time of recording of the information, light that can cause a chemical change of a polymerizable monomer, that is, light that can cause polymerization and concentration changes is used as recording light (also called as object light).

For example, when information is recorded as a volume hologram, the object light is emitted on the photosensitive layer together with the reference light so that the object light and the reference light interfere with each other in the photosensitive layer. Thereby, the interference light causes polymerization and concentration changes of the polymerizable monomer in the photosensitive layer, and as a result, the interference fringe causes a difference in refractive index in the photosensitive layer. The difference in refractive index is recorded as a volume hologram due to the interference fringe recorded in the photosensitive layer, and it becomes a volume hologram recording layer. Thereby, a holographic optical element can be obtained.

It is preferable to use a visible light laser having excellent coherence as the recording light used for recording the volume hologram (indicating the wavelength in parentheses). For example, an argon ion laser (458 nm, 488 nm, 514 nm), a krypton ion laser (647.1 nm), a helium-neon laser (633 nm), a YAG laser (532 nm) or the like can be used.

The irradiation energy amount (exposure amount) at the time of hologram recording is not particularly limited, but it is preferably in the range of 10 to 250 $mJ/cm^2$.

With regard to the hologram recording method, there are a polarized collinear hologram recording method, a multiple incident angle of reference light hologram recording method and the like, but it is possible to provide good recording quality in any recording method.

The exposure apparatus is not particularly limited, but for example, an exposure apparatus of a type whose schematic configuration is shown in Fig. 5 can be used. In the exposure apparatus shown in Fig. 5, a light beam (recording light) emitted from a laser light source 201 guides a light beam to an appropriate position of the exposure system by beam steerers 202a and 202b composed of two pairs of mirrors. Reference numeral 203 denotes a shutter, which controls ON/OFF of a light beam (recording light). Reference numeral 204 denotes a beam expander, which has a function of widening the light flux diameter and changing the numerical aperture (NA) according to the exposure area of the photosensitive layer.

The light beam (recording light) that has passed through the beam expander 204 is divided into two light fluxes by beam splitter 205. The divided light beams (recording light) are guided to the spatial filters 211 and 212 by mirrors 206 and 207 and mirrors 209 and 208, respectively. The spatial filters 211 and 212 are composed of a lens and a pinhole, and the light beam (recording light) is condensed by the lens and the light beam (recording light) is guided to manufacturing optical system 213 via the pinhole.

The manufacturing optical system 213 can set and fix a sample such as a glass prism having a photosensitive layer to be a volume hologram recording layer at a suitable position so that the reflection angle of light beam of the holographic optical element can be controlled.

The photosensitive layer provided in a prism or the like fixed to the manufacturing optical system 213 is subjected to holographic exposure (interference exposure) by light beams (recording light) divided into two light fluxes, and respectively guided through the spatial filters 211 and 212.

Although only one light source is shown in Fig. 5, in the case of performing holographic exposure using a plurality of laser light sources having different wavelengths, a chroic mirror is inserted in the optical path before the shutter 203, and laser beams emitted from a plurality of light sources may be synthesized step by step.

After the volume hologram is recorded, processing such as entire exposure with ultraviolet rays and heating can be further appropriately performed on the volume hologram recording layer, in order to promote refractive index modulation and completion of the polymerization reaction (fixation). As a light source used for entire exposure, for example, a light source emitting ultraviolet rays such as an ultra-high pressure mercury lamp, a high pressure mercury lamp, a carbon arc lamp, a xenon arc lamp or a metal halide lamp can be used. When exposing the entire surface with ultraviolet rays, the irradiation energy amount is preferably 50 to 200 $J/cm^2$. The temperature when performing the heat treatment is preferably 50 to 150°C, and the treatment time is preferably 30 minutes to 3 hours.

In the case of performing both the entire surface exposure and the heat treatment, the order is not particularly limited, and the entire surface exposure may be performed first, or the heat treatment may be performed first.

In the present embodiment, the thickness of the volume hologram recording layer (photosensitive layer) is preferably 10 to 100 $\mu$m, and more preferably 20 to 50 $\mu$m, from the viewpoint of durability.

When reproducing the volume hologram recorded in the volume hologram recording layer, a predetermined reproducing light (usually reference light) is emitted to the volume hologram recording layer. The emitted reproducing light diffracts depending on the interference fringes. Since this diffracted light contains information similar to that of the volume hologram recording layer, information recorded on the volume hologram recording layer can be reproduced by reading the above-mentioned diffracted light by an appropriate detecting means. The wavelength regions of the object light, the reproducing light and the reference light are arbitrary according to their use, and may be a visible light region or an ultraviolet light region.

[Other Layers]

In addition to the above, the holographic optical element of the present embodiment may have other layers such as a protective layer, a reflective layer, an antireflection film, and an ultraviolet absorbing layer.

The protective layer is a layer for preventing the influence such as degradation of storage stability of the recording layer. There is no limitation on the specific constitution of the protective layer, and a known one can be arbitrarily applied. For example, a layer made of a water-soluble polymer, an organic/inorganic material or the like can be formed as a protective layer. The formation position of the protective layer is not particularly limited and may be formed, for example, on the surface of the volume hologram recording layer, between the adjacent layer and a support, or on the outer surface side of the support.

The reflective layer is formed when the holographic optical element is configured as a reflection type. In the case of reflective holographic optical element, the reflective layer is usually formed on the outer surface of the adjacent layer. As the reflective layer, a conventionally known one can be appropriately referred to and applied, and for example, a metal thin film or the like can be used.

Further, the antireflection film may be provided also in either of the transmission type and reflection type holographic optical elements, on the side where the object light and the reproducing light enter and exit, or between the volume hologram recording layer and the adjacent layer. The antireflection film functions to improve the light utilization efficiency and to suppress the generation of the ghost image. As the antireflection film, a conventionally known one can

be appropriately referred to and applied.

[Support]

The holographic optical element of the present embodiment may be further sandwiched by a transparent support. The support may be adopted for protecting and holding the holographic optical element of the present embodiment, or it may be adopted to function as an optical element such as a prism in complex with the holographic optical element.

The support is not particularly limited as long as it has necessary strength and durability, and any support can be used. The shape of the support is also not limited, but it is usually formed into a flat plate shape or a film shape. The material of the support is also not limited, and it may be transparent or opaque.

Examples of transparent materials for the support include inorganic materials such as glass, silicon and quartz. Among these, glass is preferred. Examples of opaque materials for the support include metals such as aluminum; transparent supports coated with a metal such as gold, silver or aluminum, or a dielectric such as magnesium fluoride or zirconium oxide; and the like.

Surface treatment may be applied to the surface of the support. This surface treatment is usually carried out to improve the adhesion between the support and the holographic optical element. Examples of the surface treatment include corona discharge treatment on the support or formation of an undercoat layer on the support in advance. Here, examples of the composition of the undercoat layer include a halogenated phenol, a partially hydrolyzed vinyl chloride-vinyl acetate copolymer, a polyurethane resin, and the like.

Further, the surface treatment may be carried out for purposes other than improving the adhesion. Examples thereof include a reflective coating process for forming a reflective coating layer using a metal such as gold, silver or aluminum as a material; a dielectric coating process for forming a dielectric layer such as magnesium fluoride or zirconium oxide; and the like. Also, these layers may be formed of a single layer or two or more layers.

In addition, these surface treatments may be provided for the purpose of controlling the permeability of the gas and moisture of the holographic optical element. Thereby, the reliability of the holographic optical element can be further improved.

The support may be provided only on one of the upper side and the lower side of the holographic optical element, or may be provided on both of them. However, when the supports are provided on both upper and lower sides, at least one of the supports is made transparent so as to transmit active energy rays (recording light, reference light, reproducing light, etc.). When the support and the holographic optical element are bonded to each other, an adhesive having high transparency such as a silicone adhesive or an acrylic adhesive can be used.

In the case of having a support on one side or both sides of the holographic optical element, a transmission type or reflection type hologram can be recorded. When a support having reflection characteristics is used on one side of the holographic optical element, a reflection type hologram can be recorded.

[Application]

For example, the holographic optical element of the present embodiment can be suitably used for a head mount display (HMD), a head up display (HUD), an optical memory, a pickup lens for an optical disc, a color filter for liquid crystal, a reflective liquid crystal reflector, a lens, a diffraction grating, an interference filter, a fiber optic coupler, a facsimile light polarizer, a building window glass, a cover of a book, a magazine or the like, a display such as a POP, a credit card, paper money, packaging, and the like, as a security purpose for gift or forgery prevention.

## Examples

Hereinafter, specific examples and comparative examples will be described. However, the technical scope of the present invention is not limited only to the following examples. In the following operation, unless otherwise specified, the operation and the measurement of physical properties and the like were carried out under the conditions of room temperature (20 to 25°C)/relative humidity 40 to 50% RH.

[Fabrication of Holographic Optical Element]

<Preparation of Adjacent Layer 1>

Adjacent layer composition 1 having the following composition was supplied to extruder 2 of the film forming machine having the basic configuration as shown in Fig. 2, melt-extruded at a temperature of 280°C, and then filtered with a 30 μm cut filter and introduced into T die 4.

(Adjacent Layer Composition 1)

| | | |
|---|---|---|
| Polyethylene terephthalate | (Pellet form; glass transition point 80°C, melting point 253°C) | 99.95 parts by mass |
| t-Butyl mercaptan | (Thiol compound; molecular weight 90) | 0.05 parts by mass |

Next, the adjacent layer composition 1 was extruded into a sheet form from the T-die 4 to form a molten single layer sheet (resin film) 6, and the molten single layer sheet was cooled and solidified on the cooling drum 5 kept at a surface temperature of 20°C in a close contact state by an electrostatic application method to obtain an unoriented (unstretched) single layer film. Subsequently, the unstretched single layer film was preheated with a group of rolls heated to a temperature of 90°C, and then subjected to 2.5 times inter-roll stretching in the longer direction (longitudinal direction) with a heating roll at a temperature of 95°C, and cooled with a group of rolls at a temperature of 25°C to obtain a uniaxially oriented (uniaxially stretched) film.

The obtained uniaxially stretched film was led to a preheating zone at a temperature of 95°C in the tenter while holding both ends thereof with a clip, and successively continuously stretched 2.5 times in a direction perpendicular to the longitudinal direction in a heating zone at a temperature of 105°C. Still subsequently, heat treatment was carried out at 230°C for 20 seconds in a heat treatment zone in the tenter, further subjected to relaxation treatment in the 4% width direction at a temperature of 200°C, and further subjected to relaxation treatment in the 1% width direction at a temperature of 140°C. Next, the resulting film was uniformly cooled slowly and wound up to prepare a polyethylene terephthalate film having a film thickness of 60 μm (adjacent layer 1).

<Preparation of Adjacent Layers 2 to 14>

Polyethylene terephthalate films having a film thickness of 60 μm (adjacent layers 2 to 14) were prepared in the same manner as in the above <Preparation of Adjacent Layer 1>, except that the adjacent layer composition was respectively changed to the adjacent layer compositions 2 to 14 in Table 1 below. Specifically, the adjacent layers 2 to 4, 7 and 10 to 13 were prepared in the same manner as the adjacent layer 1, except for using 3-mercapto-1,2,4-triazole (molecular weight 101), 5-chloro-2-mercaptobenzothiazole (molecular weight 202), 1,4-bis(3-mercaptobutyryloxy)butane (molecular weight 299), 2-mercaptobenzoxazole (molecular weight 151), n-dodecanethiol (molecular weight 202), 4-methyl-4H-1,2,4-triazole-3-thiol (molecular weight 115), 6-ethoxy-2-mercaptobenzothiazole (molecular weight 195) and methyl thioglycolate (molecular weight 106), respectively, in place of t-butyl mercaptan, as the thiol compound. The adjacent layers 5, 6, 8 and 9 were prepared in the same manner as the adjacent layer 1, except that the added amount of the thiol compound was changed to 0.005, 0.01, 2.9 and 3.1 parts by mass, respectively. The adjacent layer 14 was prepared in the same manner as the adjacent layer 1, except that a thiol compound was not used.

[Table 1]

| Adjacent layer composition No. | Composition | Parts by mass |
|---|---|---|
| 1 | Polyethylene terephthalate<br>t-Butyl mercaptan (Thiol compound: molecular weight 90) | 99.95<br>0.05 |
| 2 | Polyethylene terephthalate<br>3-Mercapto-1,2,4-triazole (Thiol compound: molecular weight 101) | 99.95<br>0.05 |
| 3 | Polyethylene terephthalate<br>5-Chloro-2-mercaptobenzothiazole (Thiol compound: molecular weight 202) | 99.95<br>0.05 |
| 4 | Polyethylene terephthalate<br>1,4-Bis(3-mercaptobutyryloxy)butane (Thiol compound: molecular weight 299) | 99.95<br>0.05 |
| 5 | Polyethylene terephthalate<br>2-Mercaptobenzoxazole (Thiol compound: molecular weight 151) | 99.995<br>0.005 |
| 6 | Polyethylene terephthalate<br>2-Mercaptobenzoxazole (Thiol compound: molecular weight 151) | 99.99<br>0.01 |

(continued)

| Adjacent layer composition No. | Composition | Parts by mass |
|---|---|---|
| 7 | Polyethylene terephthalate<br>2-Mercaptobenzoxazole (Thiol compound: molecular weight 151) | 99.95<br>0.05 |
| 8 | Polyethylene terephthalate<br>2-Mercaptobenzoxazole (Thiol compound: molecular weight 151) | 97.1<br>2.9 |
| 9 | Polyethylene terephthalate<br>2-Mercaptobenzoxazole (Thiol compound: molecular weight 151) | 96.9<br>3.1 |
| 10 | Polyethylene terephthalate<br>n-Dodecanethiol (Thiol compound: molecular weight 202) | 99.95<br>0.05 |
| 11 | Polyethylene terephthalate<br>4-Methyl-4H-1,2,4-triazole-3-thiol (Thiol compound: molecular weight 115) | 99.95<br>0.05 |
| 12 | Polyethylene terephthalate<br>6-Ethoxy-2-mercaptobenzothiazole (Thiol compound: molecular weight 195) | 99.95<br>0.05 |
| 13 | Polyethylene terephthalate<br>Methyl thioglycolate (Thiol compound: molecular weight 106), | 99.95<br>0.05 |
| 14 | Polyethylene terephthalate | 100 |

<Preparation of Adjacent Layer 15>

The adjacent layer composition 6 and the adjacent layer composition 14 were heated at 280°C and introduced respectively into the pocket for the first layer 7 and the pocket for the second layer 8 of the T die of the two-layer structure having the basic configuration as shown in Fig. 3. In Fig. 3, illustrations of the hopper 1 and the extruder 2 as shown in Fig. 2 are omitted.

Next, the adjacent layer compositions were extruded into a sheet form from the T die 4' to form a molten bilayer sheet (resin film) 9, and the molten bilayer sheet was cooled and solidified on the cooling drum 5' kept at a surface temperature of 20°C in a close contact state by an electrostatic application method to obtain an unoriented (unstretched) two-layer film. Subsequently, the unstretched two-layer film was preheated with a group of rolls heated to a temperature of 90°C, and then subjected to 2.5 times inter-roll stretching in the longer direction (longitudinal direction) with a heating roll at a temperature of 95°C, and cooled with a group of rolls at a temperature of 25°C to obtain a uniaxially oriented (uniaxially stretched) film.

The obtained uniaxially stretched film was led to a preheating zone at a temperature of 95°C in the tenter while holding both ends thereof with a clip, and successively continuously stretched 2.5 times in a direction perpendicular to the longitudinal direction in a heating zone at a temperature of 105°C. Still subsequently, heat treatment was carried out at 230°C for 20 seconds in a heat treatment zone in the tenter, further subjected to relaxation treatment in the 4% width direction at a temperature of 200°C, and further subjected to relaxation treatment in the 1% width direction at a temperature of 140°C. Next, the resulting film was uniformly cooled slowly and wound up to prepare a polyethylene terephthalate film having a film thickness of 60 μm (adjacent layer 15). The adjacent layer 15 had a configuration in which the adjacent layers 6 and 14 were bonded to each other, and the portions formed by the adjacent layer compositions 6 and 14 had thicknesses of 0.25 μm and 59.75 μm, respectively. Also, in the following examples, in the fabrication of the holographic optical element using the adjacent layer 15, a photosensitive layer was formed on the surface formed by the adjacent layer composition 6.

<Preparation of Adjacent Layer 16>

A polyethylene terephthalate film having a film thickness of 60 μm (adjacent layer 16) was prepared in the same manner as in the above <Preparation of Adjacent Layer 15>, except that the adjacent layer composition 8 was introduced into the pocket for the first layer 7. The adjacent layer 16 had a configuration in which the adjacent layers 8 and 14 were bonded to each other, and the portions formed by the adjacent layer compositions 8 and 14 had thicknesses of 0.25 μm and 59.75 μm, respectively. Also, in the following examples, in the fabrication of the holographic optical

element using the adjacent layer 16, a photosensitive layer was formed on the surface formed by the adjacent layer composition 8.

<Preparation of Adjacent Layer 17>

Adjacent layer composition 17 having the following composition was supplied to an extruder of the film forming machine having the basic configuration as shown in Fig. 2, melt-extruded at a temperature of 220°C, and then filtered with a 30 μm cut filter and introduced into T die 4.

(Adjacent Layer Composition 17)

Acrylic resin (polymethylmethacrylate resin)

| | |
|---|---|
| (Pellet form; Vicat softening point 104°C, product name; PARAPET (registered trademark) GH-S (manufactured by Kuraray Co., Ltd.)) | 99.95 parts by mass |
| 2-Mercaptobenzoxazole (thiol compound; molecular weight 151) | 0.05 parts by mass |

Next, the adjacent layer composition 17 was extruded into a sheet form from the T-die 4 to form a molten single layer sheet (resin film) 6, and the molten single layer sheet was cooled and solidified on the cooling drum 5 kept at a surface temperature of 20°C in a close contact state by an electrostatic application method to obtain an unoriented (unstretched) single layer film. Subsequently, the unstretched single layer film was preheated with a group of rolls heated to a temperature of 110°C, and then subjected to 2.5 times inter-roll stretching in the longer direction (longitudinal direction) with a heating roll at a temperature of 120°C, and cooled with a group of rolls at a temperature of 25°C to obtain a uniaxially oriented (uniaxially stretched) film.

The obtained uniaxially stretched film was led to a preheating zone at a temperature of 140°C in the tenter while holding both ends thereof with a clip, and successively continuously stretched 1.9 times in a direction perpendicular to the longitudinal direction in a heating zone at a temperature of 150°C. Still subsequently, heat treatment was carried out at 200°C for 20 seconds in a heat treatment zone in the tenter, further subjected to relaxation treatment in the 4% width direction at a temperature of 180°C, and further subjected to relaxation treatment in the 1% width direction at a temperature of 120°C. Next, the resulting film was uniformly cooled slowly and wound up to prepare an acrylic resin film having a film thickness of 60 μm (adjacent layer 17).

<Preparation of Adjacent Layer 18>

An acrylic resin film having a film thickness of 60 μm (adjacent layer 18) was prepared in the same manner as in the above <Preparation of Adjacent Layer 17>, except that the adjacent layer composition was changed to the following adjacent layer composition 18.

(Adjacent Layer Composition 18)

Acrylic resin (polymethylmethacrylate resin)

(Pellet form; Vicat softening point 104°C, product name; PARAPET (registered trademark) GH-S (manufactured by Kuraray Co., Ltd.)) 100.00 parts by mass

<Preparation of Adjacent Layer 19>

Adjacent layer composition 19 having the following composition was supplied to extruder 2 of the film forming machine having the basic configuration as shown in Fig. 2, melt-extruded at a temperature of 280°C, and then filtered with a 30 μm cut filter and introduced into T die 4.

(Adjacent Layer Composition 19)

Cycloolefin polymer pellet

| | |
|---|---|
| (E-48R, glass transition temperature: 138°C, manufactured by Zeon Corporation) | 99.95 parts by mass |
| 2-Mercaptobenzoxazole (thiol compound; molecular weight 151) | 0.05 parts by mass |

Next, the adjacent layer composition 19 was extruded into a sheet form from the T-die 4 to form a molten single layer sheet, and the molten single layer sheet was cooled and solidified on the drum kept at a surface temperature of 20°C in a close contact state by an electrostatic application method to obtain an unoriented (unstretched) single layer film. Subsequently, the unstretched single layer film was preheated with a group of rolls heated to a temperature of 90°C, and then subjected to 2.5 times inter-roll stretching in the longer direction (longitudinal direction) with a heating roll at a temperature of 95°C, and cooled with a group of rolls at a temperature of 25°C to obtain a uniaxially oriented (uniaxially stretched) film.

The obtained uniaxially stretched film was led to a preheating zone at a temperature of 125°C in the tenter while holding both ends thereof with a clip, and successively continuously stretched 1.9 times in a direction perpendicular to the longitudinal direction in a heating zone at a temperature of 120°C. Still subsequently, heat treatment was carried out at 250°C for 20 seconds in a heat treatment zone in the tenter, further subjected to relaxation treatment in the 4% width direction at a temperature of 230°C, and further subjected to relaxation treatment in the 1% width direction at a temperature of 140°C. Next, the resulting film was uniformly cooled slowly and wound up to prepare a cycloolefin resin film having a film thickness of 60 μm (adjacent layer 19).

<Preparation of Adjacent Layer 20>

A cycloolefin film having a film thickness of 60 μm (adjacent layer 20) was prepared in the same manner as in the above <Preparation of Adjacent Layer 19>, except that the adjacent layer composition was changed to the following adjacent layer composition 20.

(Adjacent Layer Composition 20)

Cycloolefin polymer pellet

(E-48R, glass transition temperature: 138°C, manufactured by Zeon Corporation) 100.00 parts by mass

<Preparation of Adjacent Layer 21>

The following components were charged into a sealed container and heated to 70°C. Thereafter, stirring was continued for 4 hours to completely dissolve a cellulose acylate resin to obtain an adjacent layer composition (dope) 21.

(Adjacent Layer Composition (Dope) 21)

| | |
|---|---|
| Cellulose acylate (degree of acetyl group substitution: 2.50, weight average molecular weight: 87000) | 96.95 parts by mass |
| 2-(2'-Hydroxy-3',5'-di-t-butylphenyl)benzotriazole (ultraviolet absorber) 2-Mercaptobenzoxazole | 1 part by mass |
| (Thiol compound; molecular weight 151) | 0.05 parts by mass |
| A plasticizer represented by the following chemical formula (A) | 2 parts by mass |
| Methylene chloride | 395 parts by mass |
| Ethanol | 5 parts by mass |

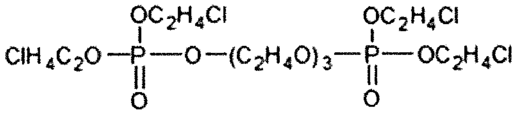

(A)

After filtering the obtained adjacent layer composition (dope) 21, the adjacent layer composition 21 was set at a temperature of 35°C and uniformly cast on a stainless steel band support at 30°C, using a belt casting apparatus. Thereafter, the composition was dried to have a residual solvent amount such that the composition could be peeld off, and then the adjacent layer composition (dope) 21 was peeled off from the stainless steel band support. At this time, the residual solvent amount of the adjacent layer composition (dope) 21 was 25% by mass. The adjacent layer composition (dope) 21 was dried at 120°C while being held in the width direction, the holding in the width direction was released, and drying was finished in the drying zones at 120°C and 135°C while conveying the composition by a number of rolls, to obtain a film. Further, knurling process to form a pattern with a width of 10 mm and a height of 5 μm was subjected to both ends of the film to prepare a cellulose acylate film with a film thickness of 60 μm (adjacent layer 21).

<Preparation of Adjacent Layers 22 to 29>

Cellulose acylate films having a film thickness of 60 μm (adjacent layers 22 to 29) were prepared in the same manner as in the above <Preparation of Adjacent Layer 21>, except that the adjacent layer composition was respectively changed to the adjacent layer compositions (dope) 22 to 29 in Tables 2-1 and 2-2 below. Specifically, the adjacent layers 22, 23, 28 and 29 were prepared in the same manner as the adjacent layers 21, except that 6-ethoxy-2-mercaptobenzothiazole (molecular weight 195), n-dodecanediol (molecular weight 202), 3-mercapto-1,2,4-triazole (molecular weight 101) and 1,4-bis(3-mercaptobutyryloxy)butane (molecular weight 299) were used respectively, in place of 2-mercaptobenzoxazole as the thiol compound. The adjacent layers 24 to 27 were prepared in the same manner as the adjacent layer 21, except that the added amount of the thiol compound was changed to 0.005, 0 (no addition), 2.90, and 3.10 parts by mass, respectively.

[Table 2-1]

| Adjacent layer composition (Dope) No. | Composition | Parts by mass |
|---|---|---|
| 21 | Cellulose acylate resin (Degree of acetyl group substitution 2.50)<br>2-(2'-Hydroxy-3',5'-di-t-butylphenyl)benzotriazole<br>2-Mercaptobenzoxazole (Thiol compound; molecular weight 151)<br>Compound of chemical formula (A)<br>Methylene chloride<br>Ethanol | 96.95<br>1.00<br>0.05<br>2.00<br>395.00<br>5.00 |
| 22 | Cellulose acylate resin (Degree of acetyl group substitution 2.50)<br>2-(2'-Hydroxy-3',5'-di-t-butylphenyl)benzotriazole<br>6-Ethoxy-2-mercaptobenzothiazole (Thiol compound; molecular weight 195)<br>Compound of chemical formula (A)<br>Methylene chloride<br>Ethanol | 96.95<br>1.00<br>0.05<br>2.00<br>395.00<br>5.00 |
| 23 | Cellulose acylate resin (Degree of acetyl group substitution 2.50)<br>2-(2'-Hydroxy-3',5'-di-t-butylphenyl)benzotriazole<br>n-Dodecanediol (Thiol compound; molecular weight 202)<br>Compound of chemical formula (A)<br>Methylene chloride<br>Ethanol | 96.95<br>1.00<br>0.05<br>2.00<br>395.00<br>5.00 |

(continued)

| Adjacent layer composition (Dope) No. | Composition | Parts by mass |
|---|---|---|
| 24 | Cellulose acylate resin (Degree of acetyl group substitution 2.50)<br>2-(2'-Hydroxy-3',5'-di-t-butylphenyl)benzotriazole<br>2-Mercaptobenzoxazole (Thiol compound; molecular weight 151)<br>Compound of chemical formula (A)<br>Methylene chloride<br>Ethanol | 96.995<br>1.00<br>0.005<br>2.00<br>395.00<br>5.00 |
| 25 | Cellulose acylate resin (Degree of acetyl group substitution 2.50)<br>2-(2'-Hydroxy-3',5'-di-t-butylphenyl)benzotriazole<br>Compound of chemical formula (A)<br>Methylene chloride<br>Ethanol | 97.00<br>1.00<br>2.00<br>395.00<br>5.00 |

[Table 2-2]

| Adjacent layer composition (Dope) No. | Composition | Parts by mass |
|---|---|---|
| 26 | Cellulose acylate resin (Degree of acetyl group substitution 2.50)<br>2-(2'-Hydroxy-3',5'-di-t-butylphenyl)benzotriazole<br>2-Mercaptobenzoxazole (Thiol compound; molecular weight 151)<br>Compound of chemical formula (A)<br>Methylene chloride<br>Ethanol | 94.10<br>1.00<br>2.90<br>2.00<br>395.00<br>5.00 |
| 27 | Cellulose acylate resin (Degree of acetyl group substitution 2.50)<br>2-(2'-Hydroxy-3',5'-di-t-butylphenyl)benzotriazole<br>2-Mercaptobenzoxazole (Thiol compound; molecular weight 151)<br>Compound of chemical formula (A)<br>Methylene chloride<br>Ethanol | 93.90<br>1.00<br>3.10<br>2.00<br>395.00<br>5.00 |
| 28 | Cellulose acylate resin (Degree of acetyl group substitution 2.50)<br>2-(2'-Hydroxy-3',5'-di-t-butylphenyl)benzotriazole<br>3-Mercapto-1,2,4-triazole (Thiol compound; molecular weight 101)<br>Compound of chemical formula (A)<br>Methylene chloride<br>Ethanol | 96.95<br>1.00<br>0.05<br>2.00<br>395.00<br>5.00 |
| 29 | Cellulose acylate resin (Degree of acetyl group substitution 2.50)<br>2-(2'-Hydroxy-3',5'-di-t-butylphenyl)benzotriazole<br>1,4-Bis(3-mercaptobutyryloxy)butane (Thiol compound; molecular weight 299)<br>Compound of chemical formula (A)<br>Methylene chloride<br>Ethanol | 96.95<br>1.00<br>0.05<br>2.00<br>395.00<br>5.00 |

<Preparation of Adjacent Layer 30>

The adjacent layer composition (dope) 25 was filtered, and using a belt casting apparatus, the adjacent layer composition (dope) 25 was set at a temperature of 35°C and uniformly cast on a stainless steel band support at 30°C.

Thereafter, the solvent was dried to form a film on the stainless steel band support. Next, an adjacent layer composition (dope) 30' having the following composition was filtered and cast on the dried film, and the solvent was dried, then a film laminated with the adjacent layer compositions (dope) 25 and 30' was peeled off from the stainless steel band support. After peeling the film from the stainless steel band support, the film was dried at 120°C while being held in the width direction, then the holding in the width direction was released, and drying was finished in the drying zones at 120°C and 135°C while conveying the composition by a number of rolls. By the above operation, a cellulose acylate film having a film thickness of 60 μm (adjacent layer 30) was prepared. The adjacent layer 30 had a configuration in which the adjacent layer 25 and a layer 30' comprising the adjacent layer composition (dope) 30' were bonded to each other, and the portions formed by the adjacent layer compositions 25 and 30' had thicknesses of 0.25 μm and 59.75 μm, respectively. Also, in the following examples, in the fabrication of the holographic optical element using the adjacent layer 30, a photosensitive layer was formed on the surface formed by the adjacent layer composition (dope) 30'.

(Adjacent Layer Composition (Dope) 30')

| | |
|---|---|
| Cellulose acylate (degree of acetyl group substitution: 2.50) | 96.97 parts by mass |
| 2-(2'-Hydroxy-3',5'-di-t-butylphenyl)benzotriazole (ultraviolet absorber) 2-Mercaptobenzoxazole | 1 part by mass |
| (Thiol compound; molecular weight 151) | 0.03 parts by mass |
| A plasticizer represented by the above chemical formula (A) | 2 parts by mass |
| Methylene chloride | 870 parts by mass |
| Ethanol | 30 parts by mass |

<<Example 1: Fabrication of Holographic Optical Element 1>>

In a dark room, the following components were charged into a container and stirred at room temperature for 30 minutes to obtain a solution. The obtained solution was filtered through a mesh, and was designated as photosensitive composition 1 for preparing a volume hologram recording layer.

<Photosensitive Composition 1 for Preparing Volume Hologram Recording Layer>

| | |
|---|---|
| Vinyl acetate-tetrafluoroethylene copolymer | 12.0 parts by mass |
| {Vinyl acetate:tetrafluoroethylene = 78 : | 22 (mass ratio)} |
| Phenol ethoxylate monoacrylate | 1.0 parts by mass |
| Ethoxylated bisphenol A diacrylate | 2.0 parts by mass |
| Fluorine-based nonionic surfactant | 0.10 parts by mass |
| (FC-430; Fluorad 430; manufactured by 3M company) | |
| 2,2'-bis(2-chlorophenyl)-4,4',5,5'-tetraphenyl 1,1'-bisimidazole | 0.05 parts by mass |
| 4-Methyl-4H-1,2,4-triazole-3-thiol | 0.05 parts by mass |
| A squarylium-based compound having the following structure | 0.10 parts by mass |
| 2-Butanone | 30.0 parts by mass |

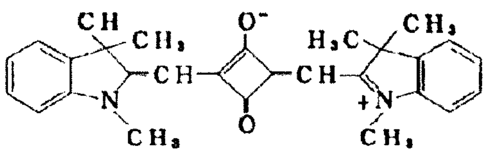

The photosensitive composition 1 for preparing a volume hologram recording layer was applied on one side of the adjacent layer 1 prepared as described above using a blade coater and dried for 30 minutes in an environment of

20°C and 50% RH to obtain a photosensitive layer having a thickness of 20 μm. Thereafter, the separately prepared adjacent layer 1 was further laminated on the surface on which the adjacent layer 1 of the photosensitive layer was not formed, by using a laminator, thereby obtaining a photosensitive film 1 in which the photosensitive layer formed from the photosensitive composition 1 for preparing a volume hologram recording layer is sandwiched between two adjacent layers 1.

As shown in Fig. 4, the obtained photosensitive film 1 was sandwiched between a pair of glass prism substrates 104a and 104b coated with silicone adhesives 103a and 103b, and then subjected to holographic exposure so that the irradiation energy amount on the photosensitive layer surface was 24 $mJ/cm^2$, using an exposure apparatus having the same basic structure as in Fig. 5 (light source: argon laser, exposure wavelength 514 nm).

After performing the holographic exposure, the resulting laminate was placed at a position of 15 cm from a high pressure mercury lamp (illuminance 100 W) for 60 minutes and then subjected to heat treatment at 100°C for 3 hours to obtain holographic optical element 1 having a volume hologram recording layer. This was designated as Example 1.

<<Examples 2 to 22, Comparative Examples 1 to 3: Fabrication of Holographic Optical Elements 2 to 25>>

Holographic optical elements 2 to 25 were fabricated in the same manner as in Example 1, except that the adjacent layer 1 was changed to the adjacent layers 2 to 24 and 30, respectively, as shown in Tables 3-1 and 3-2 below, and were designated as Examples 2 to 13, Comparative Example 1, Examples 14 to 16, Comparative Example 2, Example 17, Comparative Example 3, and Examples 18 to 22, respectively.

<<Example 23: Fabrication of Holographic Optical Element 26>>

In a dark room, the following components were charged into a container and stirred at room temperature for 30 minutes to obtain a solution. The obtained solution was filtered through a mesh to obtain mixture 2.

<Mixture 2>

| | |
|---|---|
| Hexamethylene diisocyanate | 0.1 parts by mass |
| Polypropylene glycol | 10.0 parts by mass |
| (weight average molecular weight 4000, hydroxy value 25.3 mg KOH/g) | |
| 2-{{[3-(Methylsulfanyl)phenyl]carbamoyl}oxy}ethylprop-2-enoate | 3.0 parts by mass |
| CGI 909 (organic borate polymerization initiator, manufactured by BASF Japan) | 0.01 parts by mass |
| 6-Ethoxy-2-mercaptobenzothiazole | 0.05 parts by mass |
| New methylene blue (phenothiazine type sensitizing dye, manufactured by BASF Japan) | 0.1 parts by mass |
| N-Ethyl-2-pyrrolidone | 0.5 parts by mass |
| Ethyl acetate | 25.0 parts by mass |

To the obtained mixture 2 was added 0.01 parts by mass of dibutyltin dilaurate to obtain a photosensitive composition 2 for preparing a volume hologram recording layer, and 5 minutes later, the photosensitive composition 2 for preparing a volume hologram recording layer was applied on the one side of the adjacent layer 5, using a blade coater. Thereafter, the photosensitive composition 2 was dried for 30 minutes in an environment of 20°C and 50% RH, and further subjected to heat treatment at 60°C for 2 hours to obtain a photosensitive layer having a thickness of 25 μm. The separately prepared adjacent layer 5 was further laminated on the surface on which the adjacent layer 1 of the photosensitive layer was not formed, by using a laminator, thereby obtaining a photosensitive film 26 in which the photosensitive layer formed from the photosensitive composition 2 for preparing a volume hologram recording layer is sandwiched between two adjacent layers 5.

As shown in Fig. 4, the obtained photosensitive film 26 was sandwiched between a pair of glass prism substrates 104a and 104b coated with silicone adhesives 103a and 103b, and then subjected to holographic exposure so that the energy amount on the photosensitive layer surface was 24 $mJ/cm^2$, using an exposure apparatus having the same basic structure as in Fig. 5 (light source: argon laser, exposure wavelength 514 nm), to obtain a holographic optical element 26 having a volume hologram recording layer. This was designated as Example 23.

<<Examples 24 to 32, Comparative Examples 4 to 6: Fabrication of Holographic Optical Elements 27 to 38>>

Holographic optical elements 27 to 38 were fabricated in the same manner as in Example 23, except that the adjacent layer 5 was changed to the adjacent layers 15, 14, 17 to 20, 24, 30 and 26 to 29, respectively, as shown in Table 4 below, and were designated as Example 24, Comparative Example 4, Example 25, Comparative Example 5, Example 26, Comparative Example 6, and Examples 27 to 32, respectively.

[Analysis and Evaluation]

<Content Ratio of Thiol Compound in Adjacent Layer>

With respect to the holographic optical elements of the above examples and comparative examples, the content ratio of the thiol compound contained in the adjacent layer in the vicinity of the volume hologram recording layer was quantitatively determined by the following method.

A calibration curve of the thiol compound was prepared in advance by using an eluent for liquid chromatography having different thiol compound concentrations contained in the adjacent layer. Measurement conditions of liquid chromatography were as follows.

- Measurement Conditions -

Eluent: UPW (ultrapure water) acetonitrile
Column: C8-3 manufactured by Inersil (150 × 46 mm)
Temperature: 40°C
Flow rate: 1 ml/min
Injection volume: 20 μL
Detector: GL-7400 HPLC system (manufactured by GL Sciences Inc.).

The volume hologram recording layer was peeled off from the holographic optical elements obtained in each example and comparative example, and the adjacent layer cut into a unit area (1 mm × 1 mm) was immersed in an eluent for 60 minutes. The eluent was measured by liquid chromatography, and the content ($X_1$; unit mg) of the thiol compound contained in the adjacent layer was quantitatively determined. From the obtained content $X_1$ of the thiol compound, the content ratio ($C_1$; unit % by mass) of the thiol compound contained in the entire adjacent layer was calculated by the following (Mathematical Formula 1). Here, in the following (Mathematical Formula 1), the thickness of the adjacent layer was designated as A (unit μm), and the density of the adjacent layer was designated as D (unit g/cm$^3$).
[Mathematical Formula 1]

$$C_1\ (\%\ \text{by mass}) = \{X_1 / (A \times D)\} \times 10^5 \qquad \text{(Mathematical Formula 1)}$$

Etching was performed on the adjacent layer from the interface side with the volume hologram recording layer to a depth of 100 nm by flat milling. Subsequently, the content ($X_2$; unit mg) of the thiol compound was quantitatively determined for the sample by liquid chromatography in the same manner as described above. From the obtained content $X_2$ of the thiol compound, the content ratio ($C_2$; unit % by mass) of the thiol compound contained in the vicinity of the volume hologram recording layer (specifically, within the thickness of 100 nm from the interface with the volume hologram recording layer, in the adjacent layer) was calculated by the following (Mathematical Formula 2). Here, in the following (Mathematical Formula 2), the density of the adjacent layer was designated as D (unit g/cm$^3$).
[Mathematical Formula 2]

$$C_2\ (\%\ \text{by mass}) = \{(X_1 - X_2) / D\} \times 10^6 \qquad \text{(Mathematical Formula 2)}$$

The density of the adjacent layer was measured by a density gradient tube method (JIS K-7112-1999), using a specific gravity measuring apparatus manufactured by Shibayama Scientific Co., Ltd. Specifically, the density was calculated by the following method.

First, a glass sphere with a diameter of 10.0 mm at a known density is immersed in a tank filled with a liquid

medium having a density gradient, and the immersion depth according to its buoyancy is measured. The similar operation is carried out using a glass sphere having a diameter of 10.0 mm and a different density to prepare a calibration curve of depth vs density. Next, the adjacent layer according to the present embodiment is formed into a spherical shape having a diameter of 10.0 mm and immersed in the tank. The density obtained from the immersion depth and the calibration curve was designated as density D of the adjacent layer according to the present embodiment.

<Diffraction Grating Shape Near Interface of Adjacent Layer>

The holographic optical element obtained by the above procedure was frozen with liquid nitrogen and then cut with a microtome to expose the interface between the volume hologram recording layer and the adjacent layer. The sample was observed with a transmission electron microscope JEM-2100 (manufactured by JEOL Ltd.) at a magnification of 100,000 times, and the shape of the diffraction grating formed in the volume hologram recording layer at a distance of up to 100 nm from the interface of the adjacent layer was evaluated as follows. ⊙, ○, Δ are practical ranges.

- Diffraction Grating Shape Evaluation Criteria -

⊙: The diffraction grating reaches the interface of the adjacent layer and is uniformly formed;
○: Although some disorder is observed, the diffraction grating is almost uniformly formed up to the interface of the adjacent layer;
Δ: There is a disturbance in the diffraction grating near the interface of the adjacent layer; and
×: No diffraction grating is observed near the interface of the adjacent layer.

<Diffraction Efficiency (Initial)>

With respect to the obtained holographic optical elements 1 to 38, the transmittance was measured using a spectrophotometer U-3900 (manufactured by Hitachi, Ltd.) under the following conditions.

Scan range 800 nm to 400 nm
Scan speed 600 nm/min

A baseline was calculated from the transmittance of the obtained transmittance data at a wavelength of 600 nm to 460 nm, and the diffraction efficiency was calculated from the values of the transmittance T and the baseline transmittance B at a wavelength of 521 nm by the following equation;

$$\text{Diffraction efficiency} = [(B\text{-}T)/T] \times 100\ (\%)$$

When the diffraction efficiency is 75% or more, for example, when an LED light source is used as a light source of reproducing light, there is a possibility that the power consumption of the LED light source can be reduced. On the other hand, when the initial diffraction efficiency is as low as less than 61%, since it is necessary to increase the light emission intensity of the LED light source, troubles such as increased power consumption tend to occur.

<Diffraction Efficiency and Peeling Rank after Durable Treatment>

After performing the test of dropping the fabricated holographic optical element from a height of 100 cm to the surface of the surface plate 10000 times, the diffraction efficiency was measured as described in the above section of <Diffraction Efficiency>.

Also, its morphological observation (appearance observation) was carried out, and the peeling state between the volume hologram recording layer and the adjacent layer was evaluated as follows. ⊙, ○, Δ are practical ranges.

- Peeling Rank Evaluation Criteria -

⊙: No peeling is seen at all;

○: Peeling is seen at the edge;
Δ: Peeling reaches the inside; and
×: The layers are completely peeled off.

[Table 3-1]

| | Optical element No. | Adjacent layer | | | | | | Photosensitive layer | Evaluation result | | | |
|---|---|---|---|---|---|---|---|---|---|---|---|---|
| | | Adjacent layer No. | Resin | Thiol compound type | Molecular weight | Content ratio $C_2$ (% by mass) | Content ratio $C_1$ (% by mass) | Photosensitive composition No. | Diffraction grating shape near interface | Diffraction efficiency (%) | Diffraction efficiency after durable treatment (%) | Peeling lank after durable treatment (%) |
| Example 1 | 1 | 1 | Polyethylene terephthalate | t-Butyl mercaptan | 90 | 0.05 | 0.05 | 1 | ○ | 61 | 58 | ○ |
| Example 2 | 2 | 2 | | 3-Mercapto-1,2,4-triazole | 101 | 0.05 | 0.05 | | ○ | 64 | 61 | ○ |
| Example 3 | 3 | 3 | | 5-Chloro-2-mercatobenzothiazole | 202 | 0.05 | 0.05 | | ○ | 64 | 61 | ○ |
| Example 4 | 4 | 4 | | 1,4-Bis(3-mercaptobutyryloxy)butane | 299 | 0.05 | 0.05 | | Δ | 61 | 58 | Δ |
| Example 5 | 5 | 5 | | 2-Mercaptobenzoxazole | 151 | 0.005 | 0.005 | | ○ | 63 | 61 | ○ |
| Example 6 | 6 | 6 | | | | 0.01 | 0.01 | | ○ | 63 | 61 | ○ |
| Example 7 | 7 | 7 | | | | 0.05 | 0.05 | | ○ | 64 | 61 | ○ |
| Example 8 | 8 | 8 | | | | 2.9 | 2.9 | | ○ | 64 | 61 | ○ |
| Example 9 | 9 | 9 | | | | 3.1 | 3.1 | | ○ | 64 | 60 | Δ |
| Example 10 | 10 | 10 | | n-Dodecanethiol | 202 | 0.05 | 0.05 | | Δ | 62 | 58 | Δ |
| Example 11 | 11 | 11 | | 4-Methyl-4H-1,2,4-triazole-3-thiol | 115 | 0.05 | 0.05 | | ○ | 64 | 62 | ○ |
| Example 12 | 12 | 12 | | 6-Ethoxy-2-mercaptobenzothiazole | 195 | 0.05 | 0.05 | | ○ | 64 | 62 | ○ |
| Example 13 | 13 | 13 | | Methyl thioglycolate | 106 | 0.05 | 0.05 | | Δ | 62 | 59 | Δ |
| Comparative Example 1 | 14 | 14 | | None | - | 0 | 0 | | × | 56 | 50 | × |
| Example 14 | 15 | 15 | | 2-Mercaptobenzoxazole | 151 | 0.01 | 0.00001 | | ○ | 63 | 61 | ○ |

(continued)

| | Optical element No. | Adjacent layer | | | | | | Photosensitive layer | Evaluation result | | | |
|---|---|---|---|---|---|---|---|---|---|---|---|---|
| | | Adjacent layer No. | Resin | Thiol compound type | Molecular weight | Content ratio $C_2$ (% by mass) | Content ratio $C_1$ (% by mass) | Photosensitive composition No. | Diffraction grating shape near interface | Diffraction efficiency (%) | Diffraction efficiency after durable treatment (%) | Peeling lank after durable treatment (%) |
| Example 15 | 16 | 16 | | 2-Mercaptobenzoxazole | 151 | 2.9 | 0.005 | | ○ | 64 | 61 | ○ |

[Table 3-2]

| | Optical element No. | Adjacent layer | | | | | | Photosensitive layer | Evaluation result | | | |
|---|---|---|---|---|---|---|---|---|---|---|---|---|
| | | Adjacent layer No. | Resin | Thiol compound type | Molecular weight | Content ratio $C_2$ (% by mass) | Content ratio $C_1$ (% by mass) | Photosensitive composition No. | Diffraction grating shape near interface | Diffraction efficiency (%) | Diffraction efficiency after durable treatment (%) | Peeling lank after durable treatment (%) |
| Example 16 | 17 | 17 | Acrylic resin | 2-Mercaptobenzoxazole | 151 | 0.05 | 0.05 | 1 | ○ | 62 | 60 | ○ |
| Comparative Example 2 | 18 | 18 | | None | - | 0 | 0 | | × | 54 | 45 | × |
| Example 17 | 19 | 19 | Cycloolefin resin | 2-Mercaptobenzoxazole | 151 | 0.05 | 0.05 | | ○ | 63 | 61 | ○ |
| Comparative Example 3 | 20 | 20 | | None | - | 0 | 0 | | × | 52 | 43 | × |
| Example 18 | 21 | 21 | Cellulose acylate resin | 2-Mercaptobenzoxazole | 151 | 0.05 | 0.05 | | ⊙ | 68 | 68 | ⊙ |
| Example 19 | 22 | 22 | | 6-Ethoxy-2-mercatobenzothiazole | 195 | 0.05 | 0.05 | | ⊙ | 68 | 67 | ⊙ |
| Example 20 | 23 | 23 | | n-Dodecanethiol | 202 | 0.05 | 0.05 | | ○ | 65 | 63 | ○ |
| Example 21 | 24 | 24 | | 2-Mercaptobenzoxazole | 151 | 0.005 | 0.005 | | ⊙ | 67 | 67 | ⊙ |
| Example 22 | 25 | 30 | | 2-Mercaptobenzoxazole | 151 | 0.01 | 0.0002 | | ⊙ | 68 | 68 | ⊙ |

[Table 4]

| | Optical element No. | Adjacent layer | | | | | | Photosensitive layer | Evaluation result | | | |
|---|---|---|---|---|---|---|---|---|---|---|---|---|
| | | Adjacent layer No. | Resin | Thiol compound type | Molecular weight | Content ratio $C_2$ (% by mass) | Content ratio $C_1$ (% by mass) | Photosensitive composition No. | Diffraction grating shape near interface | Diffraction efficiency (%) | Diffraction efficiency after durable treatment (%) | Peeling lank after durable treatment (%) |
| Example 23 | 26 | 5 | Polyethylene terephthalate | 2-Mercaptobenzoxazole | 151 | 0.005 | 0.005 | 2 | ○ | 63 | 61 | ○ |
| Example 24 | 27 | 15 | | 2-Mercaptobenzoxazole | 151 | 0.01 | 0.00001 | | ○ | 63 | 61 | ○ |
| Comparative Example 4 | 28 | 14 | | None | - | 0 | 0 | | × | 56 | 50 | × |
| Example 25 | 29 | 17 | Acrylic resin | 2-Mercatobenzoxazole | 151 | 0.05 | 0.05 | | ○ | 62 | 60 | ○ |
| Comparative Example 5 | 30 | 18 | | None | - | 0 | 0 | | × | 54 | 45 | × |
| Example 26 | 31 | 19 | Cycloolefin resin | 2-Mercaptobenzoxazole | 151 | 0.05 | 0.05 | | ○ | 63 | 61 | ○ |
| Comparative Example 6 | 32 | 20 | | None | - | 0 | 0 | | × | 52 | 43 | × |
| Example 27 | 33 | 24 | Cellulose acylate resin | 2-Mercaptobenzoxazole | 151 | 0.005 | 0.005 | | ⊙ | 67 | 67 | ⊙ |
| Example 28 | 34 | 30 | | | | 0.01 | 0.0002 | | ⊙ | 68 | 68 | ⊙ |
| Example 29 | 35 | 26 | | | | 2.9 | 2.9 | | ⊙ | 68 | 68 | ⊙ |
| Example 30 | 36 | 27 | | | | 3.1 | 3.1 | | ⊙ | 66 | 64 | ⊙ |
| Example 31 | 37 | 28 | | 3-Mercapto-1,2,4-triazole | 101 | 0.05 | 0.05 | | ⊙ | 66 | 66 | ⊙ |
| Example 32 | 38 | 29 | | 1,4-Bis(3-mercaptobutyrytoxy)butane | 299 | 0.05 | 0.05 | | ○ | 63 | 60 | ○ |

Among the holographic optical elements 1 to 38, by the comparison between the holographic optical elements 14, 18, 20, 28, 30 and 32 (comparative examples) and the other holographic optical elements (examples), it was confirmed that a holographic optical element in which the diffraction grating is clearly (distinctly) formed up to the adjacent layer can be obtained, in the case of having the adjacent layer containing a thiol compound. Furthermore, it was confirmed that the holographic optical element of the present example also has the effect that high diffraction efficiency does not deteriorate over a long period of time.

Also, from the comparison of the holographic optical elements 1 to 4, 7 and 10 to 13, it was shown that, when the molecular weight of the thiol compound was in the range of 100 to 250, the diffraction grating shape near the interface was good. Therefore, by setting the molecular weight of the thiol compound within the above range, it can be said that a holographic optical element in which the diffraction grating is clearly (distinctly) formed up to the adjacent layer is easily obtained. It was further confirmed that, by setting the molecular weight of the thiol compound within the above range, a holographic optical element in which high diffraction efficiency does not deteriorate over a long period of time is obtained. It is considered that the above effect is obtained due to the reason that the thiol compound moves appropriately in the adjacent layer during the fabrication of the holographic optical element and the effect of promoting the polymerization reaction near the interface between volume hologram recording layer-adjacent layer is enhanced.

Furthermore, from the comparison between the holographic optical elements 2, 3, 7, 11 and 12 and the holographic optical elements 10 and 13, it was shown that the diffraction grating shape near the interface was good when the thiol compound had a triazole skeleton, a benzothiazole skeleton or a benzoxazole skeleton. Therefore, it was also confirmed that, by using a thiol compound having any of the above skeletons, the diffraction grating is clearly (distinctly) formed up to the adjacent layer, and a holographic optical element with high diffraction efficiency is obtained. In addition, it was also confirmed that, by using such a thiol compound, a holographic optical element in which high diffraction efficiency does not deteriorate over a long period of time is obtained. It is considered that the above effect is obtained because the specific structure described above exhibits good compatibility with the resin constituting the adjacent layer, so that the thiol compound moves appropriately in the adjacent layer during the fabrication of the holographic optical element and the effect of promoting the polymerization reaction near the interface between volume hologram recording layer-adjacent layer is enhanced.

Further, from the comparison of the holographic optical elements 5 to 9, 15 and 16, it was found that, when the content ratio $C_2$ of the thiol compound in the adjacent layer at least in the region whose distance is 100 nm or less from the interface with the volume hologram recording layer (region A) is 0.005 to 3.5% by mass, further 0.005 to 3.2% by mass, and further 0.005% by mass or more and less than 3.1% by mass, a holographic optical element in which high diffraction efficiency does not deteriorate over a long period of time is easily obtained.

Moreover, from the comparison of the holographic optical elements 5 to 9, when the content ratio $C_1$ of the thiol compound in the (entire) adjacent layer is 0.005 to 3.5% by mass, further 0.005 to 3.2% by mass, and further 0.005% by mass or more and less than 3.1% by mass, it can be confirmed that the diffraction grating is easily clearly (distinctly) formed up to the adjacent layer, and a holographic optical element in which high diffraction efficiency does not deteriorate over a long period of time is obtained.

Further, from the viewpoint of comparing the resins constituting the adjacent layer, from the comparison between the holographic optical elements 1 to 13, 15 to 17 and 19 and the holographic optical elements 21 to 25, and the comparison between the holographic optical elements 26, 27, 29 and 31 and the holographic optical elements 33 to 38, it was found that the diffraction efficiency and durability are further improved when the resin constituting the adjacent layer is cellulose acylate. This is considered because, as a result of high compatibility between the thiol compound having a high polarity due to the -SH group and cellulose acylate having a high surface energy, and the inherent density of cellulose acylate, the thiol compound moves appropriately in the adjacent layer during the fabrication of the holographic optical element and the effect of promoting the polymerization reaction near the interface between volume hologram recording layer-adjacent layer is enhanced.

Furthermore, this application is based on Japanese Patent Application No. 2015-155858 filed on August 6, 2015.

## Claims

1. A holographic optical element comprising:

   a volume hologram recording layer comprising a photopolymer, and
   at least one adjacent layer which is in contact with the volume hologram recording layer and comprises a resin and a thiol compound.

2. The holographic optical element according to claim 1, wherein the thiol compound has a molecular weight of 100 to 250.

3. The holographic optical element according to claim 1 or 2, wherein the thiol compound has a triazole skeleton, a benzoxazole skeleton, or a benzothiazole skeleton.

4. The holographic optical element according to any one of claims 1 to 3, wherein the adjacent layer comprises the thiol compound in an amount of 0.005% by mass or more and 3.5% by mass or less relative to the total mass of the adjacent layer in the region whose distance is 100 nm or less from the interface between the volume hologram recording layer and the adjacent layer.

5. The holographic optical element according to any one of claims 1 to 4, wherein the adjacent layer comprises a cellulose acylate.

6. A method for producing a holographic optical element comprising:
forming a photosensitive layer comprising a polymerizable monomer so that the photosensitive layer is in contact with an adjacent layer comprising a resin and a thiol compound, and then subjecting the photosensitive layer to holographic exposure to form a volume hologram recording layer.

7. The method for producing a holographic optical element according to claim 6, wherein the adjacent layer after the volume hologram recording layer is formed comprises the thiol compound in an amount of 0.005% by mass or more and 3.5% by mass or less relative to the total mass of the adjacent layer in the region whose distance is 100 nm or less from the interface between the volume hologram recording layer and the adjacent layer.

**Patentansprüche**

1. Holographisches optisches Element, umfassend:

   eine ein Volumenhologramm speichernde Schicht, welche ein Photopolymer umfasst, und
   zumindest eine benachbarte Schicht, welche mit der ein Volumenhologramm speichernden Schicht in Kontakt steht, und welche ein Harz und eine Thiolverbindung umfasst.

2. Holographisches optisches Element gemäß Anspruch 1, wobei die Thiolverbindung ein Molekulargewicht von 100 bis 250 aufweist.

3. Holographisches optisches Element gemäß Anspruch 1 oder 2, wobei die Thiolverbindung ein Triazolgerüst, ein Benzoxazolgerüst oder ein Benzothiazolgerüst aufweist.

4. Holographisches optisches Element gemäß einem der Ansprüche 1 bis 3, wobei die benachbarte Schicht die Thiolverbindung in dem Bereich, dessen Abstand von der Grenzfläche zwischen der ein Volumenhologramm speichernden Schicht und der benachbarten Schicht 100 nm oder weniger beträgt, in einer Menge von 0.005 Masse% oder mehr und 3.5 Masse% oder weniger, bezogen auf die Gesamtmasse der benachbarten Schicht, umfasst.

5. Holographisches optisches Element gemäß einem der Ansprüche 1 bis 4, wobei die benachbarte Schicht ein Celluloseacylat umfasst.

6. Verfahren zur Herstellung eines holographischen optischen Elements, umfassend:
Ausbilden einer ein polymerisierbares Monomer umfassenden lichtempfindlichen Schicht, so dass die lichtempfindliche Schicht mit einer ein Harz und eine Thiolverbindung umfassenden benachbarten Schicht in Kontakt steht, und anschließend holographisches Belichten der lichtempfindlichen Schicht, um auf diese Weise eine ein Volumenhologramm speichernde Schicht auszubilden.

7. Verfahren zur Herstellung eines holographischen optischen Elements gemäß Anspruch 6, wobei die benachbarte Schicht, nachdem die ein Volumenhologramm speichernde Schicht ausgebildet worden ist, die Thiolverbindung in dem Bereich, dessen Abstand von der Grenzfläche zwischen der ein Volumenhologramm speichernden Schicht und der benachbarten Schicht 100 nm oder weniger beträgt, in einer Menge von 0.005 Masse% oder mehr und 3.5 Masse% oder weniger, bezogen auf die Gesamtmasse der benachbarten Schicht, umfasst.

## Revendications

1. Élément optique holographique comprenant :

   une couche d'enregistrement d'hologramme volumique comprenant un photopolymère, et
   au moins une couche adjacente qui est en contact avec la couche d'enregistrement d'hologramme volumique et comprend une résine et un composé thiol.

2. Élément optique holographique selon la revendication 1, dans lequel le composé thiol a un poids moléculaire de 100 à 250.

3. Élément optique holographique selon la revendication 1 ou 2, dans lequel le composé thiol a un squelette de triazole, un squelette de benzoxazole ou un squelette de benzothiazole.

4. Élément optique holographique selon l'une quelconque des revendications 1 à 3, dans lequel la couche adjacente comprend le composé thiol en une quantité de 0,005 % en masse ou plus et de 3,5 % en masse ou moins par rapport à la masse totale de la couche adjacente dans la région dont la distance est de 100 nm ou moins à partir de l'interface entre la couche d'enregistrement d'hologramme volumique et la couche adjacente.

5. Élément optique holographique selon l'une quelconque des revendications 1 à 4, dans lequel la couche adjacente comprend un acylate de cellulose.

6. Procédé de production d'un élément optique holographique comprenant :
   la formation d'une couche photosensible comprenant un monomère polymérisable de sorte que la couche photosensible est en contact avec une couche adjacente comprenant une résine et un composé thiol, et ensuite la soumission de la couche photosensible à une exposition holographique pour former une couche d'enregistrement d'hologramme volumique.

7. Procédé de production d'un élément optique holographique selon la revendication 6, dans lequel la couche adjacente après que la couche d'enregistrement d'hologramme volumique est formée comprend le composé thiol en une quantité de 0,005 % en masse ou plus et 3,5 % en masse ou moins par rapport à la masse totale de la couche adjacente dans la région dont la distance est de 100 nm ou moins à partir de l'interface entre la couche d'enregistrement d'hologramme volumique et la couche adjacente.

FIG. 1

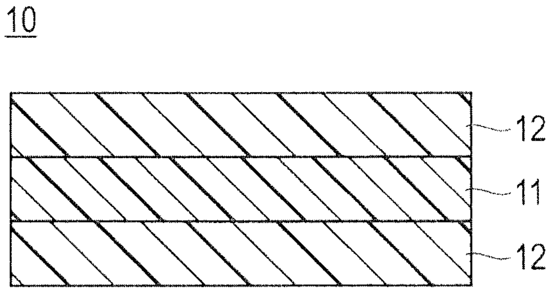


FIG. 2

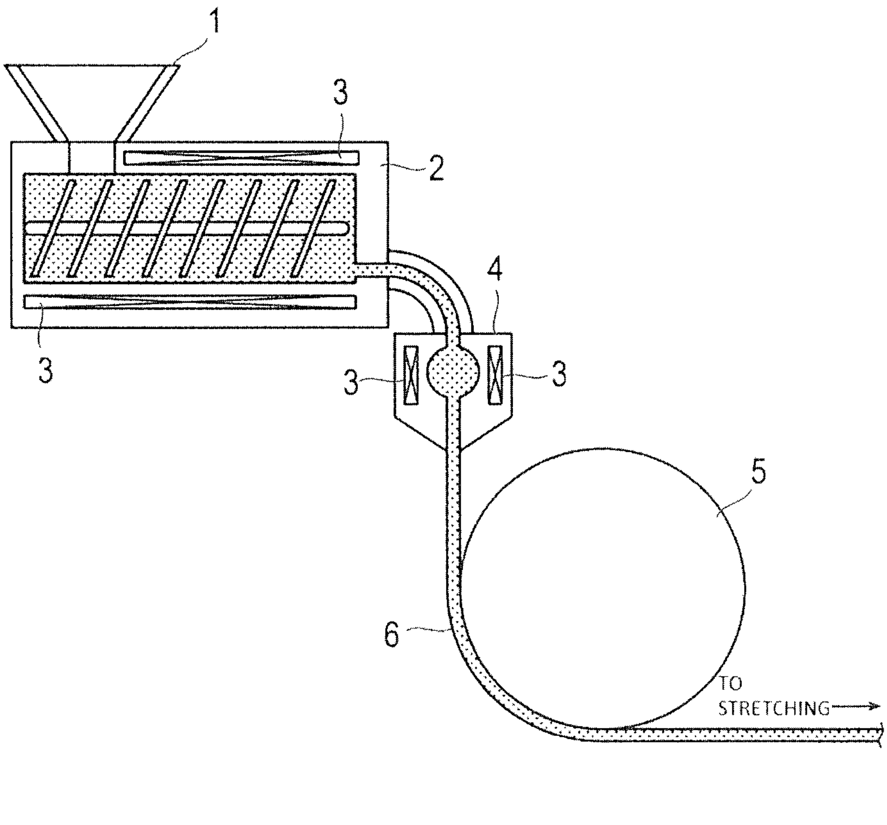

FIG. 3

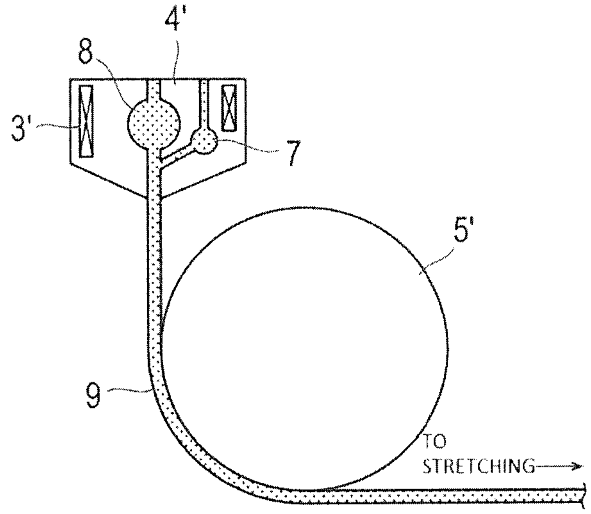


FIG. 4

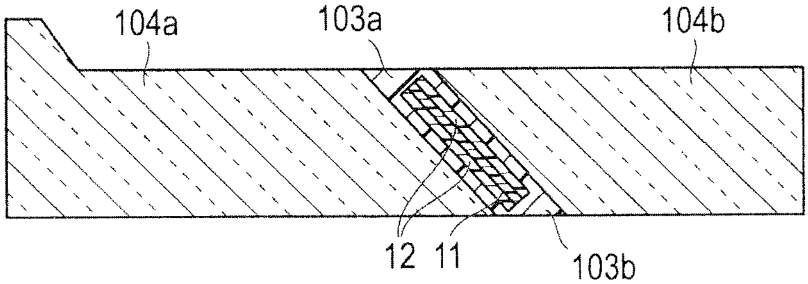

FIG. 5

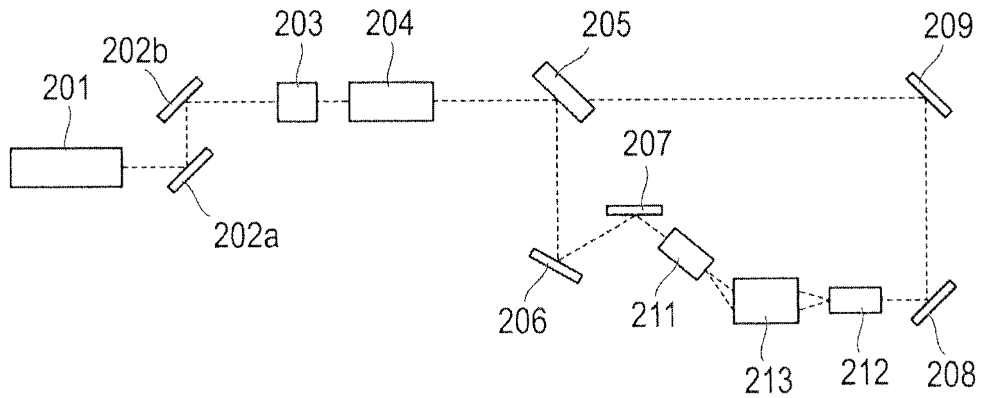

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014215410 A
- JP H06301322 A
- US 5858614 A
- JP 2014044242 A
- WO 2014030712 A
- JP H2247205 A
- JP H2261808 A
- US 4766055 A
- US 4868092 A
- US 4965171 A
- JP S54151024 A
- JP S5815503 A
- JP S5829803 A
- JP 59189340 A
- JP 60076735 A
- JP H128715 A
- JP H4239505 A
- JP 2015155858 A


### Non-patent literature cited in the description


- *PROCEEDINGS OF CONFERENCE ON RADIATION CURING ASIA,* 1988, 461-477
- Modern Coatings. R.R.Alm, October 1980